# EUROPEAN PATENT SPECIFICATION

(11) **EP 4 132 167 B1**
(45) Date of publication and mention of the grant of the patent: **30.04.2025**
(21) Application number: 21782161.0
(22) Date of filing: 01.04.2021
(51) Int. Cl.: H04W 72/04, H04L 1/18, H04L 1/1867

(54) **METHOD FOR DETERMINING PSFCH RESOURCES, CONFIGURATION METHOD AND COMMUNICATION DEVICE**
VERFAHREN ZUR BESTIMMUNG VON PSFCH-RESSOURCEN, KONFIGURATIONSVERFAHREN UND KOMMUNIKATIONSVORRICHTUNG
PROCÉDÉ DE DÉTERMINATION DE RESSOURCES PSFCH, PROCÉDÉ DE CONFIGURATION ET DISPOSITIF DE COMMUNICATION

(30) Priority: 01.04.2020 CN 202010251731
(43) Date of publication of application: 08.02.2023
(73) Proprietor: Vivo Mobile Communication Co., Ltd., Dongguan, Guangdong 523863 (CN)
(72) Inventor: LIANG, Jing, Dongguan, Guangdong 523863 (CN); LIU, Siqi, Dongguan, Guangdong 523863 (CN); JI, Zichao, Dongguan, Guangdong 523863 (CN)
(74) Representative: Chas. Hude A/S
(86) International application number: PCT/CN2021/084918
(87) International publication number: WO 2021/197421

(56) References cited:
- WO-A1-2020/033089
- CN-A- 110 214 427
- CN-A- 110 943 809
- US-A1- 2020 029 318
- LG ELECTRONICS: "Discussion on physical layer procedures for NR sidelink", vol. RAN WG1, no. Reno, USA; 20191118 - 20191122, 13 November 2019 (2019-11-13), pages 1 - 20, XP051824916, Retrieved from the Internet <URL:https://ftp.3gpp.org/tsg_ran/WG1_RL1/TSGR1_99/Docs/R1-1913237.zip R1-1913237 Discussion on physical layer procedure for NR sidelink.docx> [retrieved on 20191113]
- ITRI: "Remaining Issues on Physical Layer Procedures in NR Sidelink", vol. RAN WG1, no. e-Meeting; 20200224 - 20200306, 14 February 2020 (2020-02-14), XP052343759, Retrieved from the Internet <URL:https://ftp.3gpp.org/tsg_ran/WG1_RL1/TSGR1_100_e/Docs/R1-2000697.zip R1-2000697.docx> [retrieved on 20200214]
- SPREADTRUM COMMUNICATIONS: "Remaining issues of physical layer structure for sidelink", vol. RAN WG1, no. e-Meeting; 20200224 - 20200306, 15 February 2020 (2020-02-15), XP052343485, Retrieved from the Internet <URL:https://ftp.3gpp.org/tsg_ran/WG1_RL1/TSGR1_100_e/Docs/R1-2000420.zip R1-2000420 Remaining issues of physical layer structure for sidelink.docx> [retrieved on 20200215]
- FUJITSU: "Remaining issues on physical layer structure for sidelink", vol. RAN WG1, no. e-Meeting; 20200224 - 20200306, 14 February 2020 (2020-02-14), XP052343607, Retrieved from the Internet <URL:https://ftp.3gpp.org/tsg_ran/WG1_RL1/TSGR1_100_e/Docs/R1-2000545.zip R1-2000545 Remaining issues on physical layer structure for sidelink.docx> [retrieved on 20200214]
- FUJITSU: "“Control Channel Design and its Efficient Transmission in NR-V2X”", 3GPP TSG RAN WG1 #98BIS, R1-1910134, 8 October 2019 (2019-10-08), XP051788941

## Description

### TECHNICAL FIELD

Embodiments of the present invention relate to the field of communications technologies, and in particular, to a method for determining PSFCH resources, a method for configuring PSFCH resources, and a communications device.

### BACKGROUND

In long term evolution (Long Term Evolution, LTE), sidelink (Sidelink) only supports broadcast services, and there is no hybrid automatic repeat request (Hybrid Automatic Repeat Request, HARQ) feedback mechanism. Due to introduction of unicast and groupcast transmission modes in new radio (New Radio, NR), a receive end may be required to transmit a HARQ feedback (Feedback) to a transmit end in unicast and some groupcast transmissions, where the HARQ feedback is transmitted over a physical sidelink feedback channel (Physical Sidelink Feedback Channel, PSFCH).

A NR resource pool may be configured with physical sidelink feedback channel (Physical Sidelink Feedback Channel, PSFCH) resources for the receive end to transmit feedback information to the transmit end. However, no solution has yet been proposed as to how PSFCH resources are determined in a resource pool.

R1-1913237 discloses discussion on physical layer procedures for NR sidelink, which includes power control and sidelink HARQ procedure including HARQ-ACK feedback resource, additional condition on disabling HARQ feedback TX-RX distance based HARQ feedback and aspect on PSFCH detection.

R1-2000697 discloses feedback transmission procedure including discussion on in-coverage feedback transmission procedure and discussion on out-of-coverage feedback transmission procedure.

R1-2000420 discloses some remaining issues related to sidelink (SL) physical layer structure. The PSSCH DMRS patterns were approved. The agreements about resource pool have been achieved. It has been discussed to down-select between the following two options concerning 2^{nd} SCI format.

R1-2000545 discloses some remaining issues related to sidelink (SL) physical layer structure. The following proposals are achieved: Proposal 1: Only slot-level bitmap is considered for time domain resource pool configuration in Rel-16 NR V2X, i.e. Alt 1 is preferred. Proposal 2: In shared carrier scenario, the UL slot/symbol and the flexible slot/symbol can be used for sidelink transmission. Proposal 3: The bitmap is applied to a set of slots that can be allocated to PSCCH/PSSCH/PSFCH transmissions. Proposal 4: To assure the low latency requirement, the 'F' and 'U' symbols/slots of the Uu-link configuration can be overwritten as 'S' symbols/slots for sidelink via group common control signaling. Proposal 5: For PSCCH DMRS, 2 frequency domain OCCs are (pre-)configured. The length-2 Walsh sequence can be used as the frequency domain OCC.

### SUMMARY

Embodiments of the present invention provide a method for determining PSFCH resources, a method for configuring PSFCH resources, and a communications device to solve the issue of determining PSFCH resources in a resource pool. The invention is defined by the appended claims.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of resources according to an embodiment of the present invention;
FIG. 2 is a flowchart of a method for determining PSFCH resources according to an embodiment of the present invention;
FIG. 3 is a flowchart of a method for configuring PSFCH resources according to an embodiment of the present invention;
FIG. 4a is a first schematic diagram of a correspondence between bits and resources according to an embodiment of the present invention;
FIG. 4n is a second schematic diagram of a correspondence between bits and resources according to an embodiment of the present invention;
FIG. 5a is a third schematic diagram of a correspondence between bits and resources according to an embodiment of the present invention;
FIG. 5b is a fourth schematic diagram of a correspondence between bits and resources according to an embodiment of the present invention;
FIG. 6a is a fifth schematic diagram of a correspondence between bits and resources according to an embodiment of the present invention;
FIG. 6b is a sixth schematic diagram of a correspondence between bits and resources according to an embodiment of the present invention;
FIG. 6c is a seventh schematic diagram of a correspondence between bits and resources according to an embodiment of the present invention;
FIG. 7 is an eighth schematic diagram of a correspondence between bits and resources according to an embodiment of the present invention;
FIG. 8a is a ninth schematic diagram of a correspondence between bits and resources according to an embodiment of the present invention;
FIG. 8b is a tenth schematic diagram of a correspondence between bits and resources according to an embodiment of the present invention;
FIG. 9 is an eleventh schematic diagram of a correspondence between bits and resources according to an embodiment of the present invention;
FIG. 10 is a first structural diagram of a communications device according to an embodiment of the present invention;
FIG. 11 is a second structural diagram of a communications device according to an embodiment of the present invention; and
FIG. 12 is a third structural diagram of a communications device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The terms "first", "second", and the like in this application are used to distinguish between similar objects instead of describing a specific order or sequence. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device. In addition, the use of "and/or" in this application represents presence of at least one of the connected objects. For example, A and/or B and/or C represents presence of the following seven cases: only A, only B, only C, both A and B, both B and C, both A and C, and all of A, B, and C.

For ease of understanding, the following describes some content in the embodiments of the present invention.

### I. Sidelink (Sidelink)

Along term evolution (Long Term Evolution, LTE) system supports sidelink for direct data transmission between terminals (or named user equipments (User Equipment, UE)) without through a network device.

UE transmits sidelink control information (Sidelink Control Information, SCI) over a physical sidelink control channel (Physical Sidelink Control Channel, PSCCH) to schedule a physical sidelink shared channel (Physical Sidelink Shared Channel, PSSCH) for data transmission. Such transmission is performed in a form of broadcast, where a receive end does not provide feedback to a transmit end whether reception is successful.

LTE sidelink is designed for supporting two resource allocation modes. One is scheduled resource allocation (Scheduled Resource Allocation) mode, and the other is autonomous resource selection (Autonomous Resource Selection) mode. For the former, a network-side device controls and allocates resources for each UE, and for the latter, UE autonomously selects resources.

LTE systems also support sidelink carrier aggregation (Carrier Aggregation, CA). Unlike CA over Uu (interface for downlink (Downlink) and uplink (Uplink) transmissions), CA over LTE sidelink does not distinguish between primary component carrier (Primary Component Carrier, PCC) and secondary component carrier (Secondary Component Carrier, SCC). UE in the autonomous resource selection mode independently performs resource sensing (Sensing) and resource reservation on each component carrier (Component Carrier, CC).

LTE sidelink is designed to be applicable for specific public safety affairs (for example, emergency communication on fire site or a disaster site such as an earthquake), vehicle to everything (Vehicle to Everything, V2X) communication, or the like. Vehicle to everything communication includes various services, for example, basic security communication, advanced (autonomous) driving, platooning, and sensor extension. Because LTE sidelink supports only broadcast communication, it is mainly used for basic security communication. New radio (New Radio, NR) systems can operate in operating bands above 6 GHz which are not supported by LTE, allowing for larger operating bandwidths. Therefore, other advanced V2X services will be supported through new radio NR sidelink.

In a proximity-based service (Proximity-based Services, ProSe) network architecture, the interface for communication between terminals is called PC5 interface, and the interface connecting a terminal and an access network device in an evolved universal terrestrial radio access network (Evolved Universal Terrestrial Radio Access Network, E-UTRAN) is called Uu interface.

### II. Sidelink and unicast or groupcast link

Sidelink transmission of an LTE system is implemented based on broadcast. There is no point-to-point connection established by UE at a physical layer, and there is no feedback mechanism. A receive end neither feeds back to a transmit end whether reception is successful, nor can it perform channel measurement or feed back a measurement result.

NR sidelink is being studied. At present, companies are favoring an NR system that supports multiple transmission modes, including unicast, groupcast, and broadcast. As their names suggest, unicast is one-to-one (one to one) transmission, and groupcast is one-to-many (one to many) transmission. Broadcast is also one-to-many transmission, but excludes the concept that UEs belong to one group.

### III. Physical sidelink feedback channel (Physical Sidelink Feedback Channel, PSFCH)

In LTE, V2X supports only broadcast services, and there is no hybrid automatic repeat request (Hybrid Automatic Repeat Request, HARQ) feedback mechanism. Due to introduction of unicast and groupcast transmission modes in NR, during unicast and some groupcast services, a receive end may be required to transmit a HARQ feedback (Feedback) to a transmit end, where the HARQ feedback is transmitted over a special channel called PSFCH. PSFCH resources may be configured in a resource pool, or a resource pool may be allowed not to be configured with PSFCH resources, in which case, transmission on this resource pool will not be able to support HARQ feedback.

### IV. Resource pool (Resource Pool)

The concept of "resource pool" is there for V2X transmission in NR and LTE. A resource pool is transmitted or pre-configured by a network side. The resource pool includes resources used for transmission and many transmission-related parameters. For example, in LTE, a resource pool includes an offset of the first subframe of the resource pool, whether a PSCCH and a PSSCH are transmitted in adjacent resource blocks (Resource Block, RB), a channel busy ratio (Channel Busy Ratio, CBR), a measured sidelink received signal strength indicator (Sidelink Received Signal Strength Indication, S-RSSI) threshold, an area identifier, and the like.

In addition to configuring a conventional transmission resource pool for UE, the network side may also configure an exceptional pool (Exceptional Pool). The exceptional pool is used for some special cases, for example, during handover, in the event of radio link failure (Radio Link Failure, RLF), or during switching from an idle (IDLE) state to a connected (CONNECTED) state.

UE under different network coverages may select a resource pool and corresponding resources based on network scheduling, or autonomously select a resource pool based on a pre-configuration. For selection of a resource pool, an area in which the UE is located may need to be considered so as to select a resource pool related to the area in which the UE is located. Autonomous selection of resources in the resource pool is mainly based on a sensing mechanism, or may be random (for example, for selection of resources in the exceptional resource pool).

Furthermore, a transmission resource pool and a reception resource pool may be configured separately.

### V. Resource granularity

In an LTE system, in time domain, the smallest resource granularity is one orthogonal frequency division multiplex (Orthogonal Frequency Division Multiplex, OFDM) symbol (or one single-carrier frequency-division multiple access (Single-carrier Frequency-Division Multiple Access, SC-FDMA) symbol in the case of uplink, which is also referred to as OFDM symbol hereinafter). In frequency domain, the smallest granularity is one subcarrier.

One time-frequency resource unit is composed of one OFDM symbol and one subcarrier, which is called a resource element (Resource Element, RE). The physical layer performs resource mapping in basic units of REs. All OFDM symbols in one slot and 12 subcarriers in frequency domain form one RB, and LTE resource scheduling is performed in basic units of RBs.

### VI. Sidelink resource configuration

A frequency domain configuration of sidelink may be configured using at least one of the following parameters: sidelink carrier, sidelink bandwidth part (Sidelink Bandwidth Part, BWP), and sidelink resource pool.

A sidelink carrier may be indicated by at least one of the following parameters: subcarrier spacing of carrier; bandwidth; location of carrier center frequency; frequency domain location of sidelink synchronization signal and PBCH block (Synchronization Signal and PBCH block, SSB); offset (Offset) between carrier boundary and reference resource; and reference resource. The reference resource may be a reference point A (point A).

A sidelink BWP may be indicated by at least one of the following parameters: frequency domain location and bandwidth (Location And Bandwidth) of BWP; and subcarrier spacing of BWP. The frequency domain location and bandwidth of BWP may also be referred to as resource indicator value (Resource Indicator Value, RIV) of BWP.

A sidelink resource pool may be indicated by at least one of the following parameters: smallest RB index of subchannel: X: size of subchannel: Y; number of sub-channels: Z; and number of frequency domain resources or bandwidth of resource pool: K. Based on X, Y, and Z, frequency domain resources occupied by the resource pool and specific locations of the frequency domain resources can be obtained. It is assumed that a resource pool occupies frequency domain resources X to M, which are K frequency domain resources in total. If Y is in units of RBs, it can be concluded that the frequency domain resources are K RBs, including Z sub-channels each having Y RBs.

Any one of the foregoing parameters may be pre-configured or configured by a network side. For example, the total number of RBs occupied by a resource pool is indicated by the parameter numRbResourcePool.

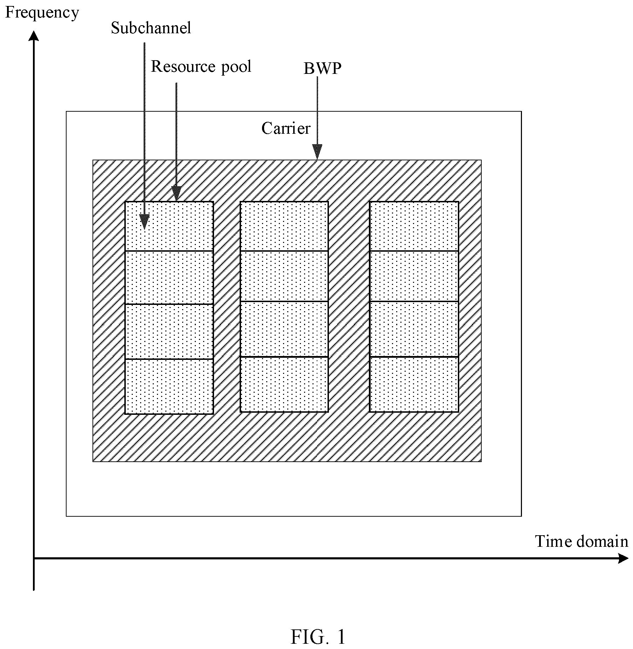

Optionally, reference may be made to FIG. 1 for a relationship between carriers, BWPs, resource pools, and subchannels. As shown in FIG. 1, number of resources in a carrier > number of resources in a BWP > number of resources in a resource pool > number of resources in a subchannel; and a carrier includes BWPs, a BWP includes resource pools, and a resource pool includes subchannels.

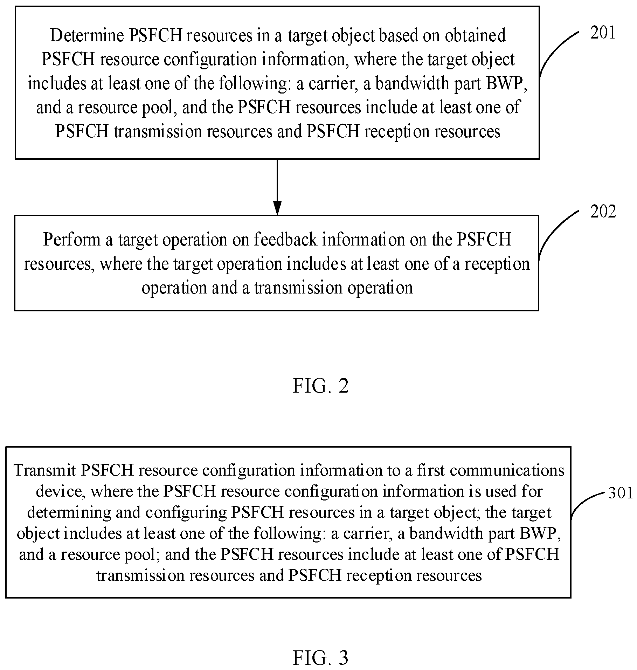

Referring to FIG. 2, FIG. 2 is a flowchart of a method for determining PSFCH resources according to an embodiment of the present invention. The method for determining PSFCH resources in this embodiment of the present invention is applied to a first communications device. Optionally, the first communications device may be a terminal. In actual application, the terminal device may be a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), on-board equipment, or the like.

As shown in FIG. 2, the method for determining PSFCH resources may include the following steps.

Step 201: Determine PSFCH resources in a target object based on obtained PSFCH resource configuration information, where the target object includes at least one of the following: a carrier, a bandwidth part BWP, and a resource pool, and the PSFCH resources include PSFCH transmission resources, or PSFCH reception resources, or both PSFCH tranmission resources and PSFCH reception resources.

In this embodiment, PSFCH resources in the target object are configured through the PSFCH resource configuration information. During specific implementation, the PSFCH resource configuration information obtained by the first communications device may be configured by a second communications device or prescribed by a protocol. Optionally, the second communications device may be a network-side device or a terminal. In actual application, the network-side device may be a base station, a relay, an access point, or the like.

When the number of target objects is greater than 1, in a first implementation, PSFCH resources in different target objects may be configured through different PSFCH resource configuration information, that is, PSFCH resources in each target object are configured through independent PSFCH resource configuration information. In a second implementation, PSFCH resources in different target objects may alternatively be configured through the same PSFCH resource configuration information.

For ease of understanding, an example is described below: it is assumed that the first communications device is configured with three resource pools. For the first implementation, the second communications device may transmit three pieces of PSFCH resource configuration information to the first communications device, each piece of PSFCH resource configuration information for configuring PSFCH resources in one resource pool; for the second implementation, the second communications device may transmit only one piece of PSFCH resource configuration information to the first communications device, for configuring PSFCH resources in the three resource pools.

Step 202: Perform a target operation on feedback information on the PSFCH resources, where the target operation includes at least one of a reception operation and a transmission operation.

Performing the reception operation on the feedback information means receiving the feedback information; and performing the transmission operation on the feedback information means transmitting the feedback information. The details are as follows:
In a case that the PSFCH resources include PSFCH transmission resources, the first communications device may transmit feedback information on the PSFCH transmission resources, and correspondingly the second communications device may receive feedback information on the PSFCH transmission resources. In this case, the first communications device may be regarded as a receive end, and the second communications device may be regarded as a transmit end.

In a case that the PSFCH resources include PSFCH reception resources, the first communications device may receive feedback information on the PSFCH reception resources, and correspondingly the second communications device may transmit feedback information on the PSFCH reception resources. In this case, the first communications device may be regarded as a transmit end, and the second communications device may be regarded as a receive end.

According to the method for determining PSFCH resources in this embodiment, a first communications device determines PSFCH resources in a target object based on obtained PSFCH resource configuration information, where the target object includes at least one of the following: a carrier, a bandwidth part BWP, and a resource pool, and the PSFCH resources include PSFCH transmission resources, or PSFCH reception resources, or both PSFCH tranmission resources and PSFCH reception resources; and performs a target operation on feedback information on the PSFCH resources, where the target operation includes at least one of a reception operation and a transmission operation. It can be learned that this embodiment of the present invention provides a solution for determining PSFCH resources in a target object, so that the first communications device and the second communications device can have a consistent understanding of PSFCH resources in the target object, thereby improving reliability of communication.

In this embodiment, optionally, the PSFCH resources in the target object may be configured in the PSFCH resource configuration information in any of the following manners.

Manner 1: The PSFCH resources in the target object may be configured through bits (bit) of the PSFCH resource configuration information.

Manner 2: The PSFCH resource configuration information may directly indicate at least one parameter of PSFCH resources in the target object.

Manner 3: The PSFCH resources in the target object may be configured through an integer NUM in the PSFCH resource configuration information, where NUM is a positive integer.

Manner 1, Manner 2, and Manner 3 are specifically described below.

In Manner 1, the PSFCH resources in the target object may be configured through bits (bit) of the PSFCH resource configuration information.

During specific implementation, the PSFCH resources in the target object may be configured through a bitmap (Bitmap) or bit string (Bit String) of the PSFCH resource configuration information, but without being limited thereto.

It should be noted that, in a case that the PSFCH resources includes PSFCH transmission resources and PSFCH reception resources, bits of the PSFCH resource configuration information that are used for configuring PSFCH transmission resources in the target object and bits used for configuring PSFCH reception resources in the target object are mutually independent. For example, if PSFCH transmission resources and PSFCH reception resources in the target object are configured through a bitmap of the PSFCH resource configuration information, the PSFCH resource configuration information may include bitmap1 and bitmap2, where bitmap1 is used for configuring PSFCH transmission resources in the target object, and bitmap2 is used for configuring PSFCH reception resources in the target object.

Optionally, there is a first correspondence between bits of the PSFCH resource configuration information and frequency domain resources in the target resource, where the target resource is any one of the following: a carrier, a BWP, and a resource pool.

It should be noted that in the case that the PSFCH resources include PSFCH transmission resources and PSFCH reception resources, the bits of the PSFCH resource configuration information may be specifically understood as: bits of the PSFCH resource configuration information that are used for configuring PSFCH transmission resources in the target object, or bits of the PSFCH resource configuration information that are used for configuring PSFCH reception resources in the target object.

It should be noted that the target resource may be the target object by default. In this case, there is no concept of target object or target resource, and target object may substitute for target resource.

In actual application, the target resource and the target object may be the same, for example, the target object and the target resource both being resource pools; or the target resource and the target object may be different, for example, the target object being a resource pool and the target resource being a BWP.

Optionally, the target resource may satisfy without limitation at least one of the following:
(1) in a case that the target object is a resource pool, the target resource is any one of the following: a carrier in which the target object is located, a BWP in which the target object is located, and a resource pool;
(2) in a case that the target object is a BWP, the target resource is a BWP or a carrier in which the target object is located; and
(3) in a case that the target object is a carrier, the target resource is a carrier.

In a case that the target resource satisfies (1), the bits of the PSFCH resource configuration information may correspond to frequency domain resources in the carrier, BWP, or resource pool, but all PSFCH resources configured by the PSFCH resource configuration information belong to the resource pool.

In a case that the target resource satisfies (2), the bits of the PSFCH resource configuration information may correspond to frequency domain resources in the carrier or BWP, but all PSFCH resources configured by the PSFCH resource configuration information belong to the BWP.

It should be noted that if the first communications device is configured with multiple BWPs or carriers, in the case that the target object is different from the target resource and that the target resource is a BWP or a carrier, the PSFCH resources in the target object correspond to identification information of the BWP or carrier in which the target object is located. Optionally, the PSFCH resource configuration information may further include identification information of a BWP or carrier in which the target object is located.

For example, if the target object is a resource pool, the target resource is a BWP, and the first communications device is configured with multiple BWPs, the PSFCH resources in the resource pool may be associated with corresponding BWP IDs.

In this way, after obtaining the PSFCH resource configuration information, the first communications device can determine the PSFCH resources in the target object based on the first correspondence and a relationship between the target object and the target resource.

Optionally, the PSFCH resource configuration information includes L bits, and L satisfies any one of the following:
a first case: a value of L is equal to a first number, where the first number is the number of actual frequency domain resources in the target resource or the maximum possible number of frequency domain resources in the target resource; or
a second case: L is a positive integer.

It should be noted that in a case that the PSFCH resources include PSFCH transmission resources and PSFCH reception resources, the L bits may be understood as L bits used for configuring PSFCH transmission resources or PSFCH reception resources in the target object. For example, if the PSFCH resources in the target object are configured through a bitmap of the PSFCH resource configuration information, the PSFCH resource configuration information including L bits can be understood as: a bitmap of the PSFCH resource configuration information that is used for configuring PSFCH transmission resources or PSFCH reception resources in the target object includes L bits. In addition, the L bits for configuring PSFCH transmission resources in the target object and L bits for configuring PSFCH reception resources in the target object may be the same or different.

During specific implementation, L may be configured by a network-side device or prescribed in a protocol.

In actual application, the number of actual frequency domain resources in the target resource is less than or equal to the maximum possible number of frequency domain resources in the target resource, and the number of actual frequency domain resources in the target object is less than or equal to the number of actual frequency domain resources in the target resource. Therefore, in the first case that a value of L is equal to a first number, L is bound to be greater than or equal to the number of frequency domain resources in the target object.

In actual application, the actual frequency domain resources in a resource pool are frequency domain resources actually occupied by the resource pool as configured by the network-side device; the actual frequency domain resources in a BWP are frequency domain resources occupied by a bandwidth of the BWP as actually configured by the network-side device; and the actual frequency domain resources in the carrier are frequency domain resources occupied by a bandwidth of the carrier as actually configured by the network-side device. Optionally, the maximum possible number of frequency domain resources in at least one of a resource pool, BWP, and carrier is 275.

In the second case, L may be any positive integer. In specific implementation, L may be less than, equal to, or greater than the number of actual frequency domain resources in the target object.

It can be learned that the value of L in the second case is more flexible than in the first case; however, compared with the second case, L is bound to be greater than or equal to the number of frequency domain resources in the target object in the first case. In this way, the first communications device can directly determine PSFCH resources in the target object based on the first correspondence, thereby reducing complexity of determining PSFCH resources in the target object.

The first correspondence is described below.

Optionally, the first correspondence satisfies any one of the following:
(a) the (p+a)-th bit of the bits of the PSFCH resource configuration information that are arranged in ascending order of numbers corresponds to the p-th frequency domain resource of the frequency domain resources in the target resource that are arranged in ascending order of numbers;
(b) the (p+a)-th bit of the bits of the PSFCH resource configuration information that are arranged in descending order of numbers corresponds to the p-th frequency domain resource of the frequency domain resources in the target resource that are arranged in descending order of numbers;
(c) the (p+a)-th bit of the bits of the PSFCH resource configuration information that are arranged in descending order of numbers corresponds to the p-th frequency domain resource of the frequency domain resources in the target resource that are arranged in ascending order of numbers;
(d) the (p+a)-th bit of the bits of the PSFCH resource configuration information that are arranged in ascending order of numbers corresponds to the p-th frequency domain resource of the frequency domain resources in the target resource that are arranged in descending order of numbers;
(e) the (p+a)-th bit of the bits of the PSFCH resource configuration information that are arranged in ascending order of numbers corresponds to a first frequency domain resource in the target resource, and bits corresponding to the target resource are contiguous; or
(f) the (p+a)-th bit of the bits of the PSFCH resource configuration information that are arranged in descending order of numbers corresponds to a first frequency domain resource in the target resource, and bits corresponding to the target resource are contiguous; where
p is an integer ranging from 1 to K, and K is the number of actual frequency domain resources in the target resource; and p+a is an integer ranging from 1 to L, L is the number of bits included in the PSFCH resource configuration information, and a is a natural number. Optionally, in a case that L is less than or equal to the number of actual frequency domain resources in the target resource, a may be 0.

For (e) and (f), a bit with the smallest number and a bit with the largest number may be regarded as contiguous bits or noncontiguous bits, which is not limited in this embodiment. The first frequency domain resource may be any frequency domain resource in the target resource.

Optionally, the first frequency domain resource satisfies at least one of the following: in a case that the target resource is a carrier or a BWP, the first frequency domain resource is a reference resource of the target resource or a specified frequency domain location in at least one frequency domain location of the target resource for synchronization signal block SSB transmission; and the first frequency domain resource is a central frequency domain resource in the target resource.

The specific frequency domain location may be any one of the at least one frequency domain location. Optionally, the specific frequency domain location may be the highest numbered frequency domain location or the lowest numbered frequency domain location of the at least one frequency domain location, but is not limited thereto.

For ease of understanding, an example is described below.

Example 1: It is assumed that the target resource is a resource pool including 3 RBs, namely, RB1 to RB3; and that a bitmap of the PSFCH resource configuration information for configuring a PSFCH reception resource pool in the resource pool includes 9 bits, namely, bit1 to bit9.

In a case that a=0:
For a scenario that the first correspondence satisfies (a), bit1 corresponds to RB1, bit2 corresponds to RB2, bit3 corresponds to RB3, and bit4 to bit9 correspond to no RBs in the resource pool.

For a scenario that the first correspondence satisfies (b), bit9 corresponds to RB3, bit8 corresponds to RB2, bit7 corresponds to RB1, and bit1 to bit6 correspond to no RBs in the resource pool.

For a scenario that the first correspondence satisfies (c), bit9 corresponds to RB1, bit8 corresponds to RB2, bit7 corresponds to RB3, and bit1 to bit6 correspond to no RBs in the resource pool.

For a scenario that the first correspondence satisfies (d), bit1 corresponds to RB3, bit2 corresponds to RB2, bit3 corresponds to RB1, and bit4 to bit9 correspond to no RBs in the resource pool.

For a scenario that the first correspondence satisfies (e) and that the first frequency domain resource is the central frequency domain resource in the resource pool, that is, the RB2, bit1 corresponds to RB2, bit2 corresponds to RB3, bit3 corresponds to RB1, and bit4 to bit9 correspond to no RBs in the resource pool.

For a scenario that the first correspondence satisfies (f) and that the first frequency domain resource is the central frequency domain resource in the resource pool, that is, the RB2, bit9 corresponds to RB2, bit8 corresponds to RB3, bit7 corresponds to RB1, and bit1 to bit6 correspond to no RBs in the resource pool.

In a case that a=1:
For a scenario that the first correspondence satisfies (a), bit2 corresponds to RB1, bit3 corresponds to RB2, bit4 corresponds to RB3, and bit1 and bit5 to bit9 correspond to no RBs in the resource pool.

For a scenario that the first correspondence satisfies (b), bit9 corresponds to RB3, bit8 corresponds to RB2, bit7 corresponds to RB1, and bit1 to bit6 correspond to no RBs in the resource pool.

For a scenario that the first correspondence satisfies (c), bit8 corresponds to RB1, bit7 corresponds to RB2, bit6 corresponds to RB3, and bit9 and bit1 to bit5 correspond to no RBs in the resource pool.

For a scenario that the first correspondence satisfies (d), bit2 corresponds to RB3, bit3 corresponds to RB2, bit4 corresponds to RB1, and bit1 and bit5 to bit9 correspond to no RBs in the resource pool.

For a scenario that the first correspondence satisfies (e) and that the first frequency domain resource is the central frequency domain resource in the resource pool, that is, the RB2, bit2 corresponds to RB2, bit3 corresponds to RB3, bit4 corresponds to RB1, and bit1 and bit5 to bit9 correspond to no RBs in the resource pool.

For a scenario that the first correspondence satisfies (f) and that the first frequency domain resource is the central frequency domain resource in the resource pool, that is, the RB2, bit8 corresponds to RB2, bit7 corresponds to RB3, bit6 corresponds to RB1, and bit9 and bit1 to bit5 correspond to no RBs in the resource pool.

Example 2: It is assumed that the target resource is a resource pool including 3 RBs, namely, RB1 to RB3, and a bitmap of the PSFCH resource configuration information for configuring a PSFCH reception resource pool in the resource pool includes 3 bits, namely, bit1 to bit3.

For a scenario that the first correspondence satisfies (a), bit1 corresponds to RB1, bit2 corresponds to RB2, and bit3 corresponds to RB3.

For a scenario that the first correspondence satisfies (b), bit3 corresponds to RB3, bit2 corresponds to RB2, and bit1 corresponds to RB1.

For a scenario that the first correspondence satisfies (c), bit3 corresponds to RB1, bit2 corresponds to RB2, and bit1 corresponds to RB3.

For a scenario that the first correspondence satisfies (d), bit1 corresponds to RB3, bit2 corresponds to RB2, and bit3 corresponds to RB1.

For a scenario that the first correspondence satisfies (e) and that the first frequency domain resource is the central frequency domain resource in the resource pool, that is, the RB2, bit1 corresponds to RB2, bit2 corresponds to RB3, and bit3 corresponds to RB1.

For a scenario that the first correspondence satisfies (f) and that the first frequency domain resource is the central frequency domain resource in the resource pool, that is, the RB2, bit3 corresponds to RB2, bit2 corresponds to RB3, and bit1 corresponds to RB1.

It can be seen from Example 2 that when L is equal to the number of actual resources in the target resource, for the scenario that the first correspondence satisfies (a) and the scenario that the first correspondence satisfies (b), the specific representations of the first correspondence are the same.

Example 3: It is assumed that the target resource is a resource pool including 3 RBs, namely, RB1 to R3; and a bitmap of the PSFCH resource configuration information for configuring a PSFCH reception resource pool in the resource pool includes 2 bits, namely, bit1 and bit2.

For a scenario that the first correspondence satisfies (a), bit1 corresponds to RB1, bit2 corresponds to RB2, and no bit corresponds to RB3.

For a scenario that the first correspondence satisfies (b), bit2 corresponds to RB3, bit1 corresponds to RB2, and no bit corresponds to RB1.

For a scenario that the first correspondence satisfies (c), bit2 corresponds to RB1, bit1 corresponds to RB2, and no bit corresponds to RB3.

For a scenario that the first correspondence satisfies (d), bit1 corresponds to RB3, bit2 corresponds to RB2, and no bit corresponds to RB1.

For a scenario that the first correspondence satisfies (e) and that the first frequency domain resource is the central frequency domain resource in the resource pool, that is, the RB2, bit1 corresponds to RB2, bit2 corresponds to RB3, and no bit corresponds to RB1.

For a scenario that the first correspondence satisfies (f) and that the first frequency domain resource is the central frequency domain resource in the resource pool, that is, the RB2, bit2 corresponds to RB2, bit1 corresponds to RB3, and no bit corresponds to RB1.

Optionally, the determining PSFCH resources in a target object based on obtained PSFCH resource configuration information includes:
determining bits of the PSFCH resource configuration information that correspond to frequency domain resources in the target object as first target bits; and
determining PSFCH resources in the target object based on each value of the first target bits; where
in a case that a first bit in the first target bits takes a first value, determining that a second frequency domain resource corresponding to the first bit in the target object is a PSFCH resource; and in a case that the first bit takes a second value, determining that the second frequency domain resource is not a PSFCH resource.

Optionally, the first value may be 0 and the second value may be 1, or the first value may be 1 and the second value may be 0, without limitation though.

In a case that the target object is the target resource, the first communications device may directly determine the first target bits based on the first correspondence.

For example, for the scenario that the first correspondence satisfies (a) in the foregoing Example 1, the first communications device may determine that the first target bits include bit1 to bit3.

It is assumed that the first value is 0, the second value is 1, bit1 and bit3 take the value 1, and bit2 takes the value 0. The first communications device may determine that RB2 in the resource pool is a PSFCH resource and can be used for PSFCH transmission; and that RB1 and RB3 in the resource pool are not PSFCH resources and cannot be used for PSFCH transmission.

In a case that the target object is different from the target resource, the first communications device needs to determine candidate bits first, where the candidate bits include bits corresponding to the frequency domain resources in the target resource in the PSFCH resource configuration information; and then determines the first target bits from the candidate bits.

For example, if the target object is a resource pool, and the target resource is a BWP, in the PSFCH resource configuration information, bit1 corresponds to RB1 in the BWP, bit2 corresponds to RB2 in the BWP, bit3 corresponds to RB3 in the BWP, bit4 corresponds to RB4 in the BWP, bit5 corresponds to RB5 in the BWP, and bit6 corresponds to RB6 in the BWP. Therefore, the candidate bits include bit1 to bit6. In addition, if a resource pool occupies RB2 to RB5 in the BWP, the first communications device may determine that the first target bits include bit2 to bit5.

It is assumed that the first value is 1, the second value is 0, bit2 and bit5 take the value 0, and bit3 and bit4 take the value 1. The first communications device may determine that RB3 and RB4 in the resource pool are PSFCH resources and can be used for PSFCH transmission; and that RB2 and RB5 in the resource pool are not PSFCH resources and cannot be used for PSFCH transmission.

In the foregoing manners, after obtaining the PSFCH resource configuration information, the first communications device may determine part or all of PSFCH resources in the target object, thereby improving reliability of communication.

Further, in a case that the PSFCH resource configuration information further includes second target bits other than the first target bits, the method further includes:
ignoring (Ignore) the second target bits.

In actual application, after obtaining the PSFCH resource configuration information, the first communications device may distinguish the first target bits and the second target bits. For the first target bits, the first communications device may check the values of the first target bits to determine whether the frequency domain resources in the target object that correspond to the first target bits are PSFCH frequency domain resources. The first communications device may directly ignore the second target bits, which means that the first communications device may perform no processing on the second target bits, for example, no checking the values of the second target bits.

For example, for the scenario that the first correspondence satisfies (a) in the foregoing Example 1, the first communications device may determine that the second target bits include bits 4 to bit9, and may ignore bits 4 to bit9.

It should be noted that, in actual application, the value of each of the second target bits can be set discretionarily, for example, the value of each of the second target bits may be set to the first value or the second value, but this is not limited.

Optionally, in a case that the target object further includes a third frequency domain resource and the third frequency domain resource corresponds to none of the bits of the PSFCH resource configuration information, the method further includes any one of the following:
determining that the third frequency domain resource is a PSFCH resource; or
determining that the third frequency domain resource is not a PSFCH resource.

For example, for the scenario that the first correspondence satisfies (a) in the foregoing Example 3, the first communications device may determine that RB3 is the third frequency domain resource.

In the case that it is determined that the third frequency domain resource is a PSFCH resource, the first communications device may determine that RB3 is a PSFCH resource and can be used for PSFCH transmission.

In the case that it is determined that the third frequency domain resource is not a PSFCH resource, the first communications device may determine that RB3 is not a PSFCH resource and cannot be used for PSFCH transmission.

Optionally, in a case that a value of L is equal to a first number and the first number is the number of actual frequency domain resources in the target resource, before the determining PSFCH resources in a target object based on obtained PSFCH resource configuration information, the method further includes:
receiving first information, where the first information is used to indicate the number of actual frequency domain resources in the target resource; or the first information is used to indicate a first parameter which is used for calculating the number of actual frequency domain resources in the target resource; and
the determining PSFCH resources in a target object based on obtained PSFCH resource configuration information includes:
   determining the PSFCH resources in the target object based on the obtained PSFCH resource configuration information and the first information.

For ease of understanding, the target resource being a resource pool is used as an example for illustration. In one implementation, the first parameter may be a size M of the resource pool. In another implementation, the first parameter may include the number Z of subchannels included in the resource pool and a size Y of each subchannel, and in this case, the size M of the resource pool is equal to Z×Y.

After determining L based on the first information, the first communications device may determine whether PSFCH resources are present in the target object using L bits indication information in the PSFCH resource configuration information.

Optionally, in a case that a value of L is equal to a first number and the first number is the number of actual frequency domain resources in the target resource, the PSFCH resource configuration information includes any one of the following:
a first bitmap or first bit string with L bits; or
N1 second bitmaps or second bit strings, where each of the second bitmaps or each of the second bit strings includes N2 bits, and L=N1×N2.

Further, the target resource includes N1 first resources, and the number of actual frequency domain resources in each of the first resources is equal to N2. For example, the target resource is a BWP, and the first resource may be a resource pool or a subchannel.

For ease of description, the bitmap used for configuring the PSFCH transmission resources or PSFCH reception resources in the target object is a target bitmap, and the bit string used for configuring the PSFCH transmission resources or PSFCH reception resources in the target object is a target bit string.

In this optional implementation, the target bitmap may include one bitmap having L bits; or the target bitmap may include N1 bitmaps each having N2 bits.

The target bit string may include one bit string having L bits; or the target bit string may include N1 bit strings each having N2 bits.

It should be noted that, in a case that the PSFCH resource configuration information includes N1 second bitmaps or second bit strings, the L bits included in the N1 second bitmaps or second bit strings are uniquely numbered. Further, the L bits included in the N1 second bitmaps or second bit strings may be consecutively numbered. In this way, the first communications device can determine the first target bits based on the first correspondence.

For Manner 2, the PSFCH resource configuration information may directly indicate at least one parameter of the PSFCH resources in the target object.

Optionally, the PSFCH resource configuration information is used to indicate at least one of the following:
a start resource of PSFCH resources in the target object;
a resource number K of PSFCH resources in the target object;
a reference resource of PSFCH resources in the target object;
the target object;
a start subchannel of PSFCH resources in the target object; and
the number of subchannels included in PSFCH resources in the target object.

According to the invention, the PSFCH resource configuration information indicates the resource number K of PSFCH resources in the target object, the determining PSFCH resources in a target object based on obtained PSFCH resource configuration information includes:
determining K contiguous frequency domain resources starting from a fifth frequency domain resource of the frequency domain resources in the target object as PSFCH resources.

In actual application, in the case that the frequency domain resources in the target object are arranged in descending order, the 1-st frequency domain resource and the last frequency domain resource may be regarded as contiguous resources or noncontiguous resources. In the case that the 1-st frequency domain resource and the last frequency domain resource may be regarded as contiguous resources, the fifth frequency domain resource may be any frequency domain resource in the target object.

According to the invention, the fifth frequency domain resource is any one of the following: the 1-st frequency domain resource or the last frequency domain resource of the frequency domain resources in the target object that are arranged in descending order of numbers; the reference resource indicated in the PSFCH resource configuration information; or the start resource indicated in the PSFCH resource configuration information.

In the case that the PSFCH resource configuration information indicates the start subchannel and the number Z of the subchannels of the PSFCH resources in the target object, the first communications device may determine Z subchannels starting from the start subchannel of the frequency domain resources in the target object as PSFCH resources.

It should be noted that, when the PSFCH resource configuration information only indicates part of the foregoing items, the first communications device may obtain other items in other ways. For example, if the PSFCH resource configuration information only indicates the start subchannel, and the PSFCH resource configuration information is configured by the network-side device, the first communications device may obtain the number of subchannels from the protocol.

In Manner 2, the PSFCH resource configuration information directly indicates the PSFCH resources in the target object, which, compared with the PSFCH resource configuration information indicating the PSFCH resources in the target object through bits, increases the speed of determining the PSFCH resources in the target object by the first communications device, thereby improving the reliability of transmission.

For Manner 3, the PSFCH resources in the target object may be configured through an integer NUM in the PSFCH resource configuration information, where NUM is a positive integer.

Optionally, there is a third correspondence between the PSFCH resource configuration information and NUM contiguous or discrete frequency domain resources in the target resource, and the target resource is any one of the following: a carrier, a BWP, and a resource pool.

Optionally, the third correspondence satisfies any one of the following:
the PSFCH resource configuration information corresponds to the first NUM frequency domain resources of the frequency domain resources in the target resource that are arranged in ascending order;
the PSFCH resource configuration information corresponds to the last NUM frequency domain resources of the frequency domain resources in the target resource that are arranged in ascending order; or
the PSFCH resource configuration information corresponds to a preset NUM frequency domain resources in the target resource.

In actual application, the preset NUM frequency domain resources may be contiguous, for example, central NUM frequency domain resources of the frequency domain resources in the target resources that are arranged in ascending order.

The preset NUM frequency domain resources may alternatively be noncontiguous. Further, the preset NUM frequency domain resources may satisfy any one of the following:
being discrete according to a specified interval I, meaning two adjacent frequency domain resources are apart from each other by an interval I;
being partly contiguous and partly discrete, for example, the preset NUM frequency domain resources include W frequency domain resource groups, where frequency domain resources in each group are contiguous, and adjacent groups are apart by an interval I; or
satisfying a preset pattern.

Optionally, the determining PSFCH resources in a target object based on PSFCH resource configuration information includes:
determining a fourth frequency domain resource occupied by the target object in the NUM frequency domain resources as a PSFCH resource.

For example, it is assumed that the target object is a resource pool, and the target resource is a BWP; the BWP includes 8 frequency domain resources, namely RB1 to RB8, the resource pool in the BWP occupies RB2 to RB5; NUM is equal to 4; and the PSFCH resource configuration information corresponds to the first NUM frequency domain resources of the frequency domain resources in the target resources that are arranged in ascending order. The first communications device may determine that the NUM frequency domain resources are RB1 to RB4, and that the fourth frequency domain resources are RB2 to RB4. In this case, the first communications device may determine that RB1 to RB4 are PSFCH resources, which can be used for PSFCH transmission.

During implementation, if the NUM frequency domain resources further include a fifth frequency domain resource that is not occupied by the target object, the first communications device may ignore the fifth frequency domain resource.

In the case that the frequency domain resources in the target object further include a sixth frequency domain resource other than the fourth frequency domain resource, the first communications device may determine that the sixth frequency domain resource is a PSFCH resource, or determine that the sixth frequency domain resource is not a PSFCH resource.

Compared with Manner 1 in which the value of each of the first target bits needs to be further examined to determine whether a frequency domain resource in the target object corresponding to each of the first target bits is a PSFCH resource, Manner 3 can directly determine the fourth frequency domain resources occupied by the target object in the NUM frequency domain resources as PSFCH resources, so that the speed of PSFCH resource determining can be improved, thereby improving the reliability of communication.

Referring to FIG. 3, FIG. 3 is a flowchart of a method for configuring PSFCH resources according to an embodiment of the present invention. The method for configuring PSFCH resources in this embodiment of the present invention is applied to a second communications device.

As shown in FIG. 3, the method for configuring PSFCH resources may include the following steps.

Step 301: Transmit PSFCH resource configuration information to a first communications device, where the PSFCH resource configuration information is used for determining and configuring PSFCH resources in a target object; the target object includes at least one of the following: a carrier, a bandwidth part BWP, and a resource pool; and the PSFCH resources include PSFCH transmission resources, or PSFCH reception resources, or both PSFCH tranmission resources and PSFCH reception resources.

Based on the method for configuring PSFCH resources in this embodiment, the second communications device transmits the PSFCH resource configuration information to the first communications device, so that the first communications device determines the PSFCH resources in the target object based on the PSFCH resource configuration information, thus providing a solution for determining PSFCH resources in a target object. In this way, the first communications device and the second communications device can have a consistent understanding of PSFCH resources in the target object, thereby improving reliability of communication.

Optionally, in a case that PSFCH resources are configured through bits of the PSFCH resource configuration information, there is a first correspondence between the bits of the PSFCH resource configuration information and frequency domain resources in the target resource, and the target resource is any one of the following: a carrier, a BWP, or a resource pool.

Optionally, the PSFCH resource configuration information includes L bits, and L satisfies any one of the following:
a value of L is equal to a first number, where the first number is the number of actual frequency domain resources in the target resource or the maximum possible number of frequency domain resources in the target resource; or
L is a positive integer.

Optionally, the first correspondence satisfies any one of the following:
the (p+a)-th bit of the bits of the PSFCH resource configuration information that are arranged in ascending order of numbers corresponds to the p-th frequency domain resource of the frequency domain resources in the target resource that are arranged in ascending order of numbers;
the (p+a)-th bit of the bits of the PSFCH resource configuration information that are arranged in descending order of numbers corresponds to the p-th frequency domain resource of the frequency domain resources in the target resource that are arranged in descending order of numbers;
the (p+a)-th bit of the bits of the PSFCH resource configuration information that are arranged in descending order of numbers corresponds to the p-th frequency domain resource of the frequency domain resources in the target resource that are arranged in ascending order of numbers;
the (p+a)-th bit of the bits of the PSFCH resource configuration information that are arranged in ascending order of numbers corresponds to the p-th frequency domain resource of the frequency domain resources in the target resource that are arranged in descending order of numbers; or
the (p+a)-th bit of the bits of the PSFCH resource configuration information that are arranged in ascending order of numbers corresponds to a first frequency domain resource in the target resource, and bits corresponding to the target resource are contiguous; where
p is an integer ranging from 1 to K, and K is the number of actual frequency domain resources in the target resource; and p+a is an integer ranging from 1 to L, L is the number of bits included in the PSFCH resource configuration information, and a is a natural number.

Optionally, the first frequency domain resource satisfies at least one of the following:
in a case that the target resource is a carrier or a BWP, the first frequency domain resource is: a reference resource of the target resource, or a specified frequency domain location in at least one frequency domain location of the target resource for synchronization signal block SSB transmission; and
the first frequency domain resource is a central frequency domain resource in the target resource.

Optionally, in a case that a value of L is equal to a first number and the first number is the number of actual frequency domain resources in the target resource, the method further includes:
transmitting first information to the first communications device, where the first information is used to indicate the number of actual frequency domain resources in the target resource; or the first information is used to indicate a first parameter which is used for calculating the number of actual frequency domain resources in the target resource.

Optionally, in a case that a value of L is equal to a first number and the first number is the number of actual frequency domain resources in the target resource, the PSFCH resource configuration information includes any one of the following:
a first bitmap or first bit string with L bits; or
N1 second bitmaps or second bit strings, where each of the second bitmaps or each of the second bit strings includes N2 bits, and L=N1×N2.

Optionally, the target resource includes N1 first resources, and the number of actual frequency domain resources in each of the first resources is equal to N2.

Optionally, the target resource satisfies at least one of the following:
in a case that the target object is a resource pool, the target resource is any one of the following: a carrier in which the target object is located, a BWP in which the target object is located, and a resource pool;
in a case that the target object is a BWP, the target resource is a BWP or a carrier in which the target object is located; and
in a case that the target object is a carrier, the target resource is a carrier.

Optionally, the PSFCH resource configuration information is used to indicate at least one of the following:
a start resource of PSFCH resources in the target object;
a resource number K of PSFCH resources in the target object;
a reference resource of PSFCH resources in the target object;
the target object;
a start subchannel of PSFCH resources in the target object; and
the number of subchannels included in PSFCH resources in the target object.

It should be noted that this embodiment serves as an implementation on the second communications device which corresponds to the preceding method embodiment. Therefore, reference can be made to the related description in the preceding method embodiment, and the same beneficial effects can be achieved. To avoid repetition, details are not described herein again.

The various optional implementations described in this embodiment may be implemented in combination if they are not conflicting with each other or they may be implemented independently. This is not limited in the embodiments of the present invention.

For ease of understanding, an example is described below.

For ease of description, the following parameters and meanings are specified:
L_{carrier_i}, number of frequency domain resources in sidelink carrier i, whose maximum possible value is L_{carrier_max}, for example, 275;
L_{bwp_j}, number of frequency domain resources in sidelink BWP j, whose maximum possible value is L_{bwp_max}, for example, 275; and
L_{RP_k}, number of frequency domain resources in sidelink resource pool k, whose maximum possible value is L_{RP_max}, for example, 275.

(1) The PSFCH resource configuration information may include at least one of the following formats:
   (a) bitmap or bit string of length L; and
   (b) integer NUM.
(2) The PSFCH resource configuration information of the target object is obtained through at least one of configuration or pre-configuration, or protocol definition, or indication by another user:
   (a) the target object includes at least one of a carrier, a BWP, and a resource pool; and
   (b) different target objects may correspond to their respective PSFCH resource configuration information, or may correspond to the same PSFCH resource configuration information, which is not limited in the present invention; for example, different resource pools correspond to respective PSFCH resource configuration information.
(3) If the PSFCH resource configuration information is in a bitmap or bit string format,
   (a) L is a preset value, for example, a value specified by a configuration or pre-configuration or protocol, and preferably, L is the maximum possible number of actual frequency domain resources included in the frequency domain resources, specifically including at least one of the following cases.

Case 1: If the target object is a resource pool, PSFCH resource configuration information length L corresponding to the resource pool includes one of the following cases:
Case 1-1: L is equal to the maximum possible number of frequency domain resources in the carrier, that is, the PSFCH resource configuration information length L equals L_{carrier_max};
Case 1-2: L is equal to the number of frequency domain resources in the carrier, that is, L=L_{carrier_i};
Case 1-3: L is equal to the maximum possible number of frequency domain resources in the BWP, that is, L_{bwp_max};
Case 1-4. L is equal to the number of frequency domain resources in the BWP, that is, L=L_{bwp_j};
Case 1-5: L is equal to the maximum possible number of frequency domain resources in the resource pool, that is, L=L_{RP_max}; and
Case 1-6: L is equal to the number of frequency domain resources in the resource pool, that is, L=L_{RP_k}.

Case 2: If the target object is a carrier, PSFCH resource configuration information length L corresponding to each different carrier includes one of the following cases:
Case 2-1: L is equal to the maximum possible number of frequency domain resources in the carrier, that is, PSFCH resource configuration information length L equals L_{carrier_max};
Case 2-2: L is equal to the number of frequency domain resources in the carrier, that is, L=L_{carrier_i};

Case 3: If the target object is a BWP, PSFCH resource configuration information length L corresponding to each different BWP includes one of the following cases:
Case 3-1: L is equal to the maximum possible number of frequency domain resources in the carrier, that is, PSFCH resource configuration information length L equals L_{carrier_max};
Case 3-2: L is equal to the number of frequency domain resources in the carrier, that is, L=L_{carrier_i};
Case 3-3: L is equal to the maximum possible number of frequency domain resources in the BWP, that is, L_{bwp_max}; and
Case 3-4. L is equal to the number of frequency domain resources in the BWP, that is, L=L_{bwp_j}.

Preferably, one possible value of at least one of the foregoing L_{carrier_max}, L_{bwp_max}, and L_{RP_max} is 275.

Note: The maximum possible number of frequency domain resources in a carrier or BWP or resource pool can be understood as the maximum possible number of frequency domain resources included in the carrier or BWP or resource pool within the range allowable by the configuration or pre-configuration or protocol definition, which however does not mean that a carrier or BWP or resource pool including such number of frequency domain resources is actually configured or pre-configured or exists.

(4) When the PSFCH resource configuration information is a bitmap or bit string, a parsing method is as follows:
(a) bits of the bitmap correspond to frequency domain resources in the target resource, and the target resource includes at least one of a resource pool, BWP, and carrier. The target resource and the target object are not necessarily the same. For example, in one case, the target resource is a BWP, and there is a correspondence between the bits of the PSFCH resource configuration information and frequency domain resources in the BWP, but a user needs to determine PSFCH resources in a resource pool using this information.

The correspondence between the bits of the bitmap and the frequency domain resources in the target resource may include any one of the following:
the lowest bit of the PSFCH resource configuration information corresponds to the lowest frequency domain resource in the target resource, the second lowest bit corresponds to the second lowest frequency domain resource in the target resource, and so on;
the highest bit of the PSFCH resource configuration information corresponds to the highest frequency domain resource in the target resource, the second highest bit corresponds to the second highest frequency domain resource in the target resource, and so on;
the highest bit of the PSFCH resource configuration information corresponds to the lowest frequency domain resource in the target resource, the second highest bit corresponds to the second lowest frequency domain resource in the target resource, and so on;
the lowest bit of the PSFCH resource configuration information corresponds to the highest frequency domain resource in the target resource, the second lowest bit corresponds to the second highest frequency domain resource in the target resource, and so on;
a preset bit (for example, the second lowest bit or the second highest bit) of the PSFCH resource configuration information corresponds to the lowest or highest frequency domain resource in the target resource, and so on, where the preset bit may be any bit other than the highest bit and the lowest bit; and
the lowest or highest bit of the PSFCH resource configuration information corresponds to a preset frequency domain resource in the target resource (for example, a central frequency domain resource), and so on, where the preset frequency domain resource includes any one of the following: the highest RB, the lowest RB, or any RB of the SSB; or point A.

Note: The foregoing 'highest' may be replaced by the 'leftmost', 'rightmost', 'largest numbered', 'last', or 'first', and the 'second highest' may be replaced by the 'second leftmost', 'second rightmost', 'second largest numbered', 'second to last', or 'second', and so on; correspondingly, the foregoing 'lowest' may be replaced by the 'rightmost', 'leftmost', 'lowest numbered (for example, 0)', 'first', or 'last', and the 'second highest' may be replaced by the 'second rightmost', 'second leftmost', 'second lowest numbered (for example, 1)', 'second', or 'second to last', and so on.

When L is greater than the number of frequency domain resources in the target resource, some bits may not have corresponding resources in the target object.

(b) The user determines the PSFCH resources in the target object according to the foregoing method, including at least one of the following:
if there is at least one bit of the PSFCH resource configuration information in the foregoing method that corresponds to a frequency domain resource in the target object, that the user determines the PSFCH resources in the target object based on the PSFCH resource configuration information includes: the user determines the PSFCH resources in the target object based on at least the part of bits having such correspondence. Optionally, when the bit is 1, it indicates that the frequency domain resource is used for PSFCH transmission, and when the bit is 0, it indicates that the frequency domain resource is not used for PSFCH transmission, or the other way round.

If there is at least one bit of the PSFCH configuration in the foregoing method that does not correspond to any frequency domain resource in the target object, the corresponding resource does not belong to PSFCH resources in the target object. Optionally, all such bits are set to 0 or 1. Optionally, the user ignores these bits that have no such correspondence.

The target object being a resource pool is used as an example. Examples of determining PSFCH resources in the resource pool by a user are given below.

Embodiment 1 (the target resource is a resource pool): The length of PSFCH resource configuration information of one resource pool is L_{RP_max}; it is assumed that L_{RP_max} is 275 while resource pool includes only K RBs, the lowest bit of the PSFCH resource configuration information corresponds to the lowest RB in the resource pool, and bits correspond to the resources in ascending order; therefore, there are L_{RP_max}-K bits having no correspondence with frequency domain resources in the resource pool; and when the user determines PSFCH resources in the resource pool, the user determines the PSFCH resources based on the lowest K bits, and or the user ignores the highest L_{RP_max}-K bits of the PSFCH resource configuration information.

Embodiment 2 (the target resource is a resource pool): One resource pool includes K RBs, its corresponding length L of PSFCH resource configuration information is K, and it is assumed that the lowest bit of the PSFCH resource configuration information corresponds to the lowest RB of the resource pool and the bits correspond to the resources in ascending order; therefore, the bits are in one-to-one correspondence with the frequency domain resources in the resource pool, so that which resources are PSFCH resources can be determined according to a value of each of the bits.

Embodiment 3 (the target resource is a BWP): The length of PSFCH resource configuration information of one resource pool is L_{bwp_max}, which is 275, and the resource pool includes only K RBs. If the lowest RB in the resource pool is the X-th RB in the BWP, the RBs included in the resource pool are the X-th to (X+K-1)-th RBs of the BWP. If the lowest bit of the PSFCH resource configuration information corresponds to the lowest RB of the BWP and the bits correspond to the resources in ascending order, the X-th lowest bit corresponds to the lowest RB in the resource pool, the (X+K-1)-th lowest bit corresponds to the highest RB in the resource pool, and there are L_{RP_max}-K bits having no correspondence with the frequency domain resources in the resource pool; and when the user determines PSFCH resources in the resource pool, the user determines the PSFCH resources based on the X-th to (X+K-1)-th bits of the PSFCH information, and/or, the user ignores the L_{RP_max}-K bits other than the X-th to (X+K-1)-th bits of the PSFCH resource configuration information.

(5) When the PSFCH resource configuration information is an integer NUM, the parsing method is as follows:
(a) the PSFCH resource configuration information corresponds to NUM frequency domain resources in the target resource, and the target resource includes at least one of resource pool, BWP, and carrier. The target resource and the target object are not necessarily the same. For example, in one case, the target resource is a BWP, and bits of the PSFCH resource configuration information correspond to frequency domain resources in the BWP, but a user needs to determine PSFCH resources in the resource pool through this information.

The PSFCH resource configuration information may have any one of the following correspondences with NUM frequency domain resources in the target resource:
corresponding to the lowest NUM frequency domain resources in the target resource;
corresponding to the highest NUM frequency domain resources in the target resource; and
corresponding to preset NUM frequency domain resources (for example, central NUM frequency domain resources) in the target resource.

The NUM frequency domain resources may be NUM frequency domain resources that are contiguous, or NUM frequency domain resources that are discrete (for example, NUM frequency domain resources being discrete with a specified interval I), or NUM frequency domain resources that are partly contiguous and partly discrete (for example, divided into NUM1 groups with an interval I between groups, where resources in each group are contiguous), or NUM resources that satisfy a preset pattern (pattern).

(b) The user determines the PSFCH resources in the target object according to the foregoing method, including at least one of the following:
if there is at least one frequency domain resource in the PSFCH resource configuration information in the foregoing method that corresponds to a frequency domain resource in the target object, that the user determines PSFCH resources in the target object based on PSFCH resource configuration information includes: the user determines the PSFCH resources in the target object based on at least part of frequency domain resources having such correspondence; and
if there is at least one bit of the PSFCH configuration in the foregoing method that corresponds to any frequency domain resource in the target object, its corresponding resource does not belong to PSFCH resources in the target object, and the user ignores (ignore) these frequency domain resources that do not have such correspondence.

Preferably, in this case, the target object is the target resource.

The following examples are described in conjunction with the embodiments.

In the following embodiments, examples are described mainly with the target object being a resource pool, specifically how PSFCH resources in a resource pool are determined, which nevertheless also applies for cases where the target object is a BWP or a carrier.

Embodiment 1: PSFCH resources in the resource pool are indicated by a bitmap of size L. L is a preset value, for example, the maximum possible number of frequency domain resources in the resource pool.

It is assumed that RBs occupied by the resource pool are RBs X to M, which are K RBs in total.

### Implementation 1:

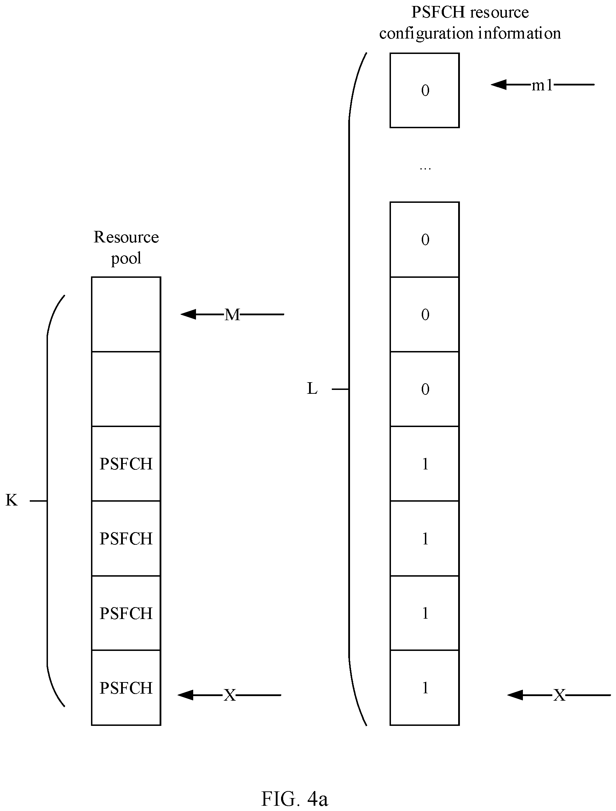

As shown in FIG. 4a, the lowest bit of the PSFCH resource configuration information corresponds to the lower boundary (for example, the lowest RB) of the resource pool. It is assumed that the bitmap of the PSFCH resource configuration information includes 275 bits, of which the lowest 6 bits correspond to frequency domain resources in the resource pool. For these bits that have such correspondence, a bit set to 1 indicates the presence of a PSFCH feedback resource on a corresponding RB, and a bit set to 0 indicates the presence of no PSFCH feedback resource on a corresponding RB; or a bit set to 0 indicates the presence of a PSFCH feedback resource on a corresponding RB, and a bit set to 1 indicates the presence of no PSFCH feedback resource on a corresponding RB. A bit in the bitmap set to 1 indicating the presence of a PSFCH feedback resource on a corresponding RB is used as an example. In FIG. 4a, PSFCH resources are present on the lowest 4 RBs in the resource pool while no PSFCH resources are present on the remaining two RBs. In FIG. 4a, the resource pool may be viewed as the target object and the target resource.

Optionally, for bits that have no correspondence with the frequency domain resources in the resource pool, even if they are set to 1, they do not indicate PSFCH resources in the resource pool.

In this implementation, a field description (field description) may be any one of the following:
indicates the set of physical resource blocks (Physical Resource Block, PRB) that are actually used for PSFCH transmission and reception, where the first PRB refers to the lowest RB index of the subchannel with the lowest index in the resource pool (Indicates the set of PRBs that are actually used for PSFCH transmission and reception, the first PRB refers to the lowest RB index of the subchannel with the lowest index in the resource pool); or
indicates the set of PRBs that are actually used for PSFCH transmission and reception, where the first bit refers to the RB with the lowest index in the resource pool (Indicates the set of PRBs that are actually used for PSFCH transmission and reception, the first bit refers to the RB with the lowest index in the resource pool).

### Implementation 2:

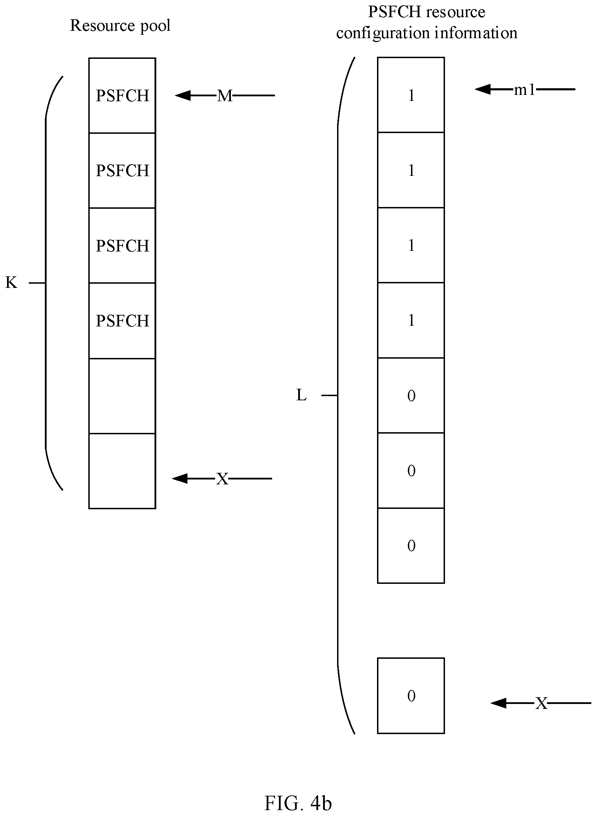

As shown in FIG. 4b, the highest bit of the PSFCH resource configuration information corresponds to the upper boundary (for example, the highest RB) of the resource pool. It is assumed that the bitmap of the PSFCH resource configuration information includes 275 bits, of which the highest 6 bits correspond to frequency domain resources in the resource pool. For these bits that have such correspondence, a bit set to 1 indicates the presence of a PSFCH feedback resource on a corresponding RB, and a bit set to 0 indicates the presence of no PSFCH feedback resource on a corresponding RB; or a bit set to 0 indicates the presence of a PSFCH feedback resource on a corresponding RB, and a bit set to 1 indicates the presence of no PSFCH feedback resource on a corresponding RB. A bit in the bitmap set to 1 indicating the presence of a PSFCH feedback resource on a corresponding RB is used as an example. In FIG. 4b, PSFCH resources are present on the highest 4 RBs in the resource pool while no PSFCH resources are present on the remaining two RBs. In FIG. 4b, the resource pool may be viewed as the target object and the target resource.

Further, for bits that have no correspondence with the frequency domain resources in the resource pool, even if they are set to 1, they do not indicate PSFCH resources in the resource pool.

In this implementation, a field description (field description) may be any one of the following:
indicates the set of PRBs that are actually used for PSFCH transmission and reception, where the first PRB refers to the largest RB index of the subchannel with the largest index in the resource pool (Indicates the set of PRBs that are actually used for PSFCH transmission and reception, the first PRB refers to the largest RB index of the subchannel with the largest index in the resource pool); or
indicates the set of PRBs that are actually used for PSFCH transmission and reception, where the first bit refers to the RB with the largest index in the resource pool (Indicates the set of PRBs that are actually used for PSFCH transmission and reception, the first bit refers to the RB with the largest index in the resource pool).

Embodiment 2: PSFCH resources in the resource pool are indicated by a bitmap of size L. A value of L is the number of actually included frequency domain resources.

It is assumed that RBs occupied by the resource pool are RBs X to M, which are K RBs in total; and L=K.

### Implementation 1:

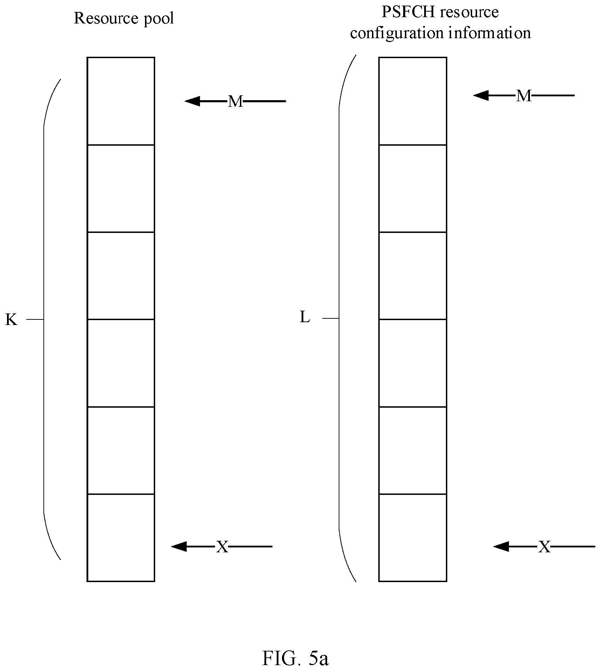

As shown in FIG. 5a, the lowest bit of the PSFCH resource configuration information corresponds to the lower boundary (for example, the lowest RB) of the resource pool. It is assumed that the bitmap of the PSFCH resource configuration information includes K bits, each of which corresponds to a frequency domain resource in the resource pool. For these bits that have such correspondence, a bit set to 1 indicates the presence of a PSFCH feedback resource on a corresponding RB, and a bit set to 0 indicates the presence of no PSFCH feedback resource on a corresponding RB; or a bit set to 0 indicates the presence of a PSFCH feedback resource on a corresponding RB, and a bit set to 1 indicates the presence of no PSFCH feedback resource on a corresponding RB. In FIG. 5a, the resource pool may be viewed as the target object and the target resource.

In this implementation, a field description (field description) may be:
indicates the set of PRBs that are actually used for PSFCH transmission and reception, where the first PRB refers to the lowest RB index of the subchannel with the lowest index in the resource pool (Indicates the set of PRBs that are actually used for PSFCH transmission and reception, the first PRB refers to the lowest RB index of the subchannel with the lowest index in the resource pool).

### Implementation 2:

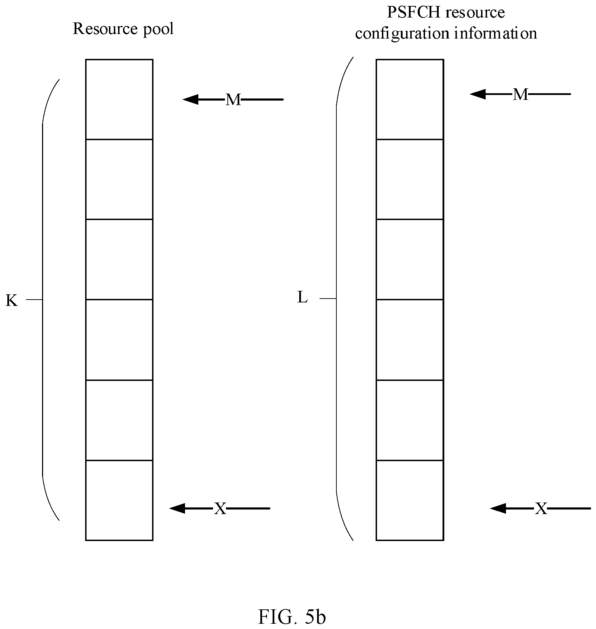

As shown in FIG. 5b, the highest bit of the PSFCH resource configuration information corresponds to the upper boundary (the highest RB) of the resource pool. It is assumed that the bitmap of the PSFCH resource configuration information includes K bits, each of which corresponds to a frequency domain resource in the resource pool. For these bits that have such correspondence, a bit set to 1 indicates the presence of a PSFCH feedback resource on a corresponding RB, and a bit set to 0 indicates the presence of no PSFCH feedback resource on a corresponding RB; or a bit set to 0 indicates the presence of a PSFCH feedback resource on a corresponding RB, and a bit set to 1 indicates the presence of no PSFCH feedback resource on a corresponding RB. In FIG. 5b, the resource pool may be viewed as the target object and the target resource.

In this implementation, a field description (field description) may be:
indicates the set of PRBs that are actually used for PSFCH transmission and reception, where the first PRB refers to the highest RB index of the subchannel with the highest index in the resource pool (Indicates the set of PRBs that are actually used for PSFCH transmission and reception, the first PRB refers to the highest RB index of the subchannel with the highest index in the resource pool).

Embodiment 3: PSFCH resources in the resource pool are indicated by a bitmap of size L.

### Implementation 1:

It is assumed that L equals the number of frequency domain resources included in the BWP in which the resource pool is located.

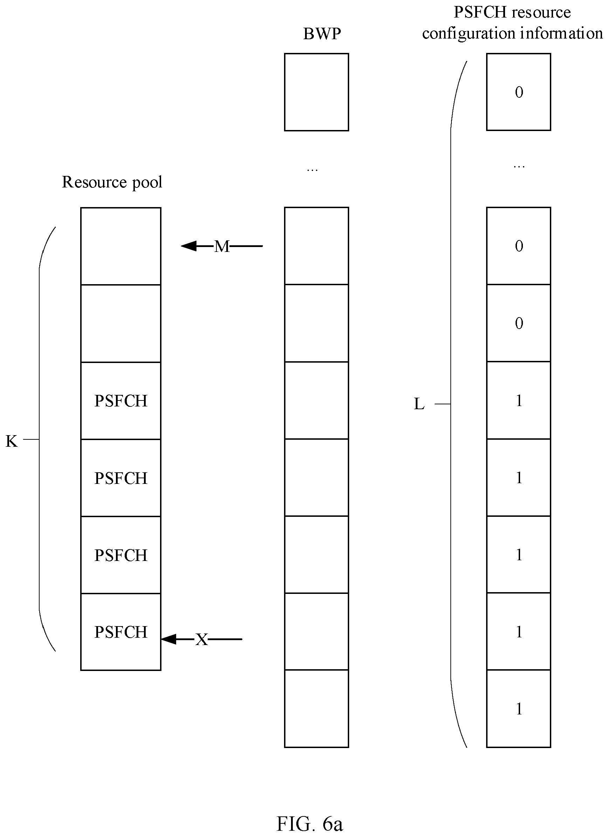

As shown in FIG. 6a, the highest bit of the PSFCH resource configuration information corresponds to the upper boundary (for example, the highest RB) of the BWP in which the resource pool is located. Alternatively, the lowest bit of the PSFCH resource configuration information corresponds to the lower boundary (for example, the lowest RB) of the BWP in which the resource pool is located. If the resource pool occupies RBs X to M in the BWP, the bits corresponding to the RBs X to M in the PSFCH resource configuration information indicate whether PSFCH resources are present on the corresponding RBs in the resource pool. A bit in the bitmap set to 1 indicating the presence of a PSFCH feedback resource on a corresponding RB is used as an example. In FIG. 6a, PSFCH resources are present on the lowest 4 RBs in the resource pool. In FIG. 6a, the resource pool may be viewed as the target object, and the BWP may be viewed as the target resource.

When there are multiple BWPs, PSFCH resources may be associated with corresponding BWP IDs.

The method for determining the lower boundary or the upper boundary of the BWP may be, for example, calculation based on one or more of a BWP frequency domain location, a subcarrier spacing, and a frequency offset value.

### Implementation 2:

It is assumed that L equals the maximum possible number of frequency domain resources in the BWP in which the resource pool is located, for example, 275.

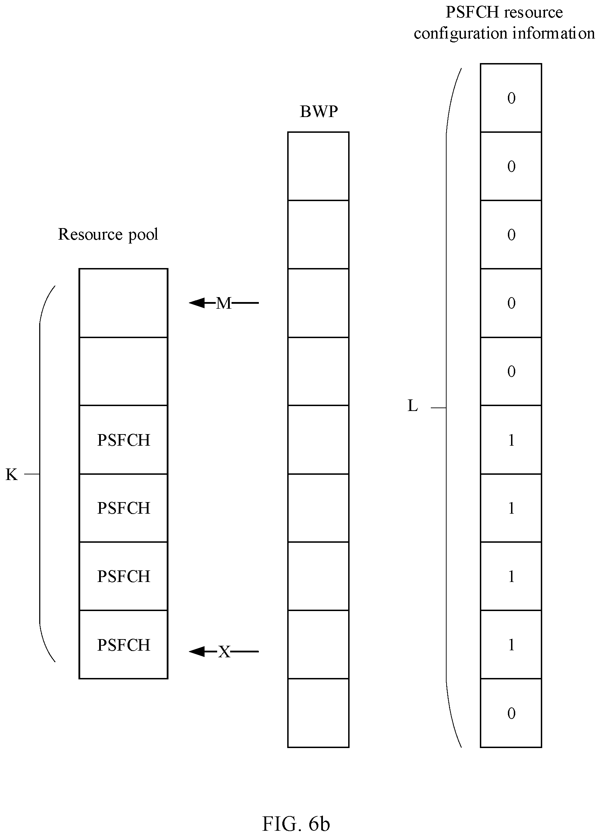

As shown in FIG. 6b, the lowest bit of the PSFCH resource configuration information corresponds to the lower boundary (for example, the lowest RB) of the BWP. If the resource pool occupies RBs X to M in the BWP, the bits corresponding to the RBs X to M in the PSFCH resource configuration information indicate whether PSFCH resources are present on the corresponding RBs in the resource pool. A bit in the bitmap set to 1 indicating the presence of a PSFCH feedback resource on a corresponding RB is used as an example. In FIG. 6b, PSFCH resources are present on the lowest 4 RBs in the resource pool. In FIG. 6b, the resource pool may be viewed as the target object, and the BWP may be viewed as the target resource.

When there are multiple BWPs, PSFCH resources may be associated with corresponding BWP IDs.

In this implementation, a field description (field description) may be any one of the following:
indicates the set of PRBs that are actually used for PSFCH transmission and reception, where the first PRB indicated by the set refers to the first PRB of the BWP which is determined as in the location and bandwidth configured for the BWP, the first PRB of actually used PSFCH resources starts from the first PRB of the resource pool within the BWP (Indicates the set of PRBs that are actually used for PSFCH transmission and reception, the first PRB indicated by the set refers to the first PRB of the BWP which is determined as in the locationAndBandwidth configured for the BWP, the first PRB of actually used PSFCH resources starts from the first PRB of the resource pool within the BWP); or
indicates the set of PRBs that are actually used for PSFCH transmission and reception, where the first PRB refers to the first PRB of the BWP (Indicates the set of PRBs that are actually used for PSFCH transmission and reception, the first PRB refers to the first PRB of the BWP).

### Implementation 3:

It is assumed that L equals the maximum possible number of frequency domain resources in the BWP in which the resource pool is located, for example, 275.

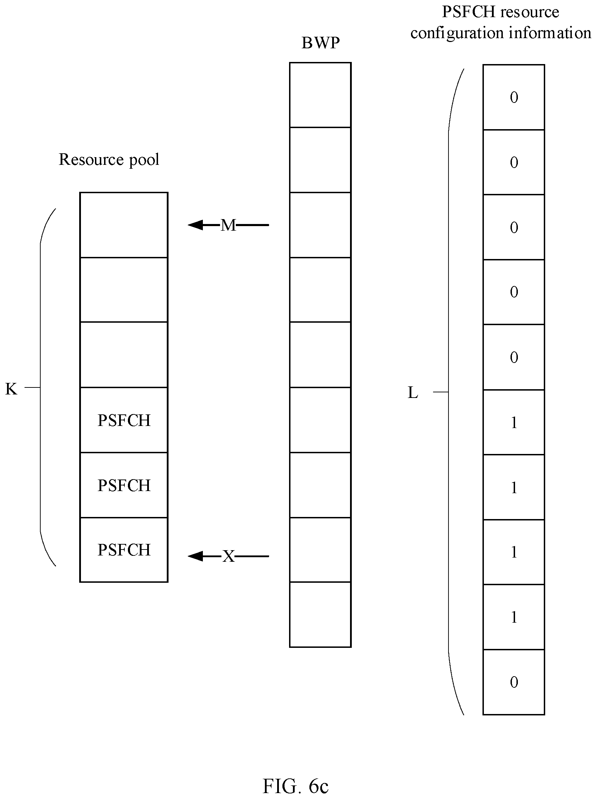

As shown in FIG. 6c, the highest bit of the PSFCH resource configuration information corresponds to the upper boundary (for example, the highest RB) of the BWP. If the resource pool occupies RBs X to M in the BWP, the bits corresponding to the RBs X to M in the PSFCH resource configuration information indicate whether PSFCH resources are present on the corresponding RBs in the resource pool. A bit in the bitmap set to 1 indicating the presence of a PSFCH feedback resource on a corresponding RB is used as an example. In the following figure, PSFCH resources are present on the highest 4 RBs in the resource pool. In FIG. 6c, the resource pool may be viewed as the target object, and the BWP may be viewed as the target resource.

When there are multiple BWPs, PSFCH resources may be associated with corresponding BWP IDs.

In this implementation, a field description (field description) may be any one of the following:
indicates the set of PRBs that are actually used for PSFCH transmission and reception, where the first PRB refers to the PRB with the largest (or smallest) index of the BWP which is determined as in the location and bandwidth configured for the BWP (Indicates the set of PRBs that are actually used for PSFCH transmission and reception, the first PRB refers to the PRB with the larges (or smallest) index of the BWP which is determined as in the locationAndBandwidth configured for the BWP).
indicates the set of PRBs that are actually used for PSFCH transmission and reception, where the first PRB refers to the PRB of the BWP with the largest (or smallest) index (Indicates the set of PRBs that are actually used for PSFCH transmission and reception, the first PRB refers to the PRB of the BWP with the largest (or smallest) index).

### Embodiment 4

Implementation 1: The bits of the PSFCH resource configuration information may have a specific relationship with a frequency domain location Q of the BWP. For example, RBs corresponding to the bitmap of the PSFCH resource configuration information are totally N RBs centered on Q. When there are multiple BWPs, PSFCH resources may be associated with corresponding BWP IDs.

Implementation 2: The lowest bit of the PSFCH resource configuration information corresponds to a reference point A of an SL carrier. When there are multiple carriers, PSFCH resources may be associated with corresponding carrier identifiers.

The reference point A may be a location of sl-AbsoluteFrequencyPointA configured by a corresponding network side.

Implementation 3: The bits of the PSFCH resource configuration information have a specific relationship with a frequency location of the SL carrier for SSB transmission. For example, RBs corresponding to the bitmap of the PSFCH resource configuration information are totally 275 RBs centered on the frequency location of the SL carrier for SSB transmission. When there are multiple carriers, PSFCH resources may be associated with corresponding carrier identifiers.

Implementation 4: The bits of the PSFCH resource configuration information are aligned with the lower boundary of the SL carrier.

Implementation 5: The bits of the PSFCH resource configuration information are aligned with the upper boundary of the SL carrier.

The foregoing contents mainly include the following cases:
bits of the bitmap correspond to PSFCH resources in the carrier, and bits corresponding to the frequency domain resources in the resource pool indicate PSFCH resources in the resource pool;
bits of the bitmap correspond to PSFCH resources in the resource pool, and bits corresponding to the frequency domain resources in the resource pool indicate PSFCH resources in the resource pool; and
bits of the bitmap correspond to PSFCH resources in the BWP, and bits corresponding to the frequency domain resources in the resource pool indicate PSFCH resources in the resource pool.

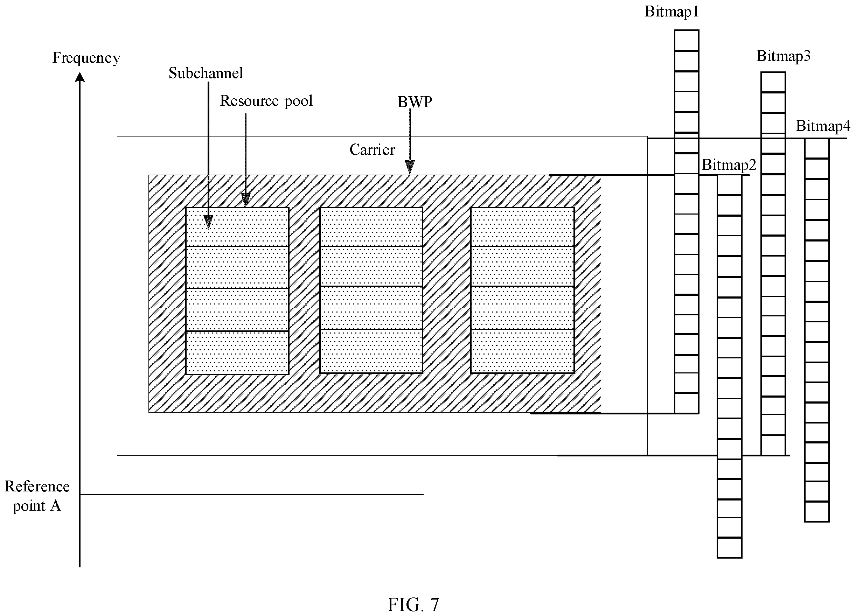

As shown in FIG. 7, the lowest bit of bitmap1 corresponds to the lower boundary of the BWP; the highest bit of bitmap2 corresponds to the upper boundary of the BWP; the lowest bit of bitmap3 corresponds to the lower boundary of the carrier; and the highest bit of bitmap4 corresponds to the lower boundary of the carrier.

Embodiment 5: The PSFCH resource configuration information is indicated by a bitmap of size N.

N has a fixed value, which is configured by a base station or prescribed in a protocol. N is an integer.

It is assumed that RBs occupied by the resource pool are RBs X to M, which are K RBs in total.

### Implementation 1:

Bits of this bitmap correspond to PSFCH resources in the resource pool.

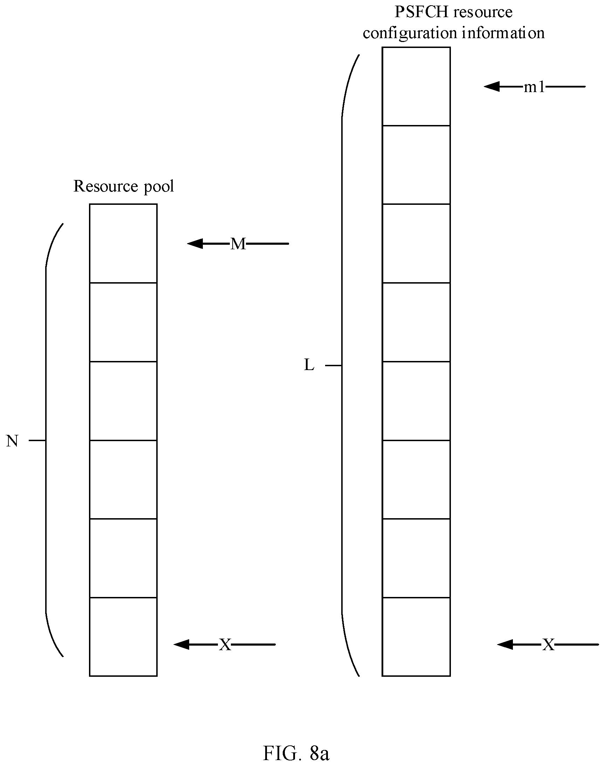

It is assumed that N>K. As shown in FIG. 8a, the lowest bit of the PSFCH resource configuration information corresponds to the lower boundary of the resource pool, meaning that RBs corresponding to the bitmap are RBs X to m1, which are N RBs in total. In FIG. 8a, the resource pool may be viewed as the target object and the target resource.

It is assumed that N=K. The bits of the PSFCH resource configuration information correspond to the upper and lower boundaries of the resource pool.

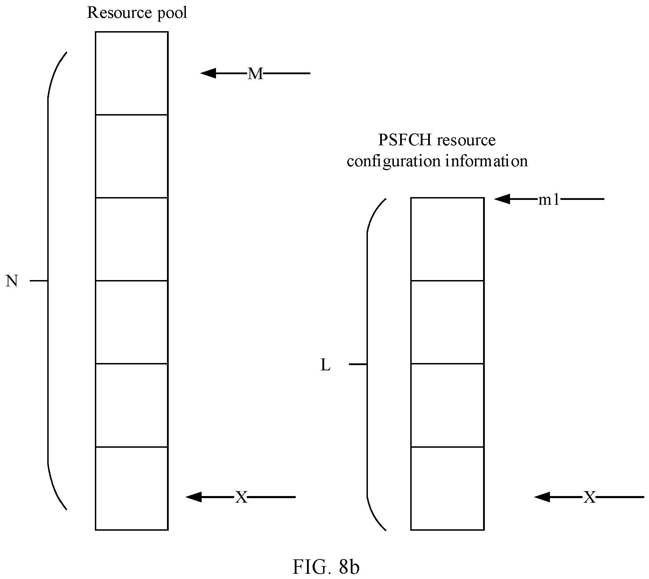

It is assumed that N<K, as shown in FIG. 8b. Because the size of the bitmap is smaller than the size K of the resource pool, for resource pool locations to which the bitmap cannot correspond, it is considered that PSFCH resources are present; or it is considered that no PSFCH resources are present. In FIG. 8b, the resource pool may be viewed as the target object and the target resource.

The case of N<K or N=K applies to all the following implementations.

Implementation 2: The highest bit of the PSFCH resource configuration information corresponds to the upper boundary of the resource pool, meaning that RBs corresponding to the bitmap are RBs x1 to M, which are N RBs in total.

Implementation 3: The bits of the PSFCH resource configuration information correspond to the lower boundary of the BWP. When there are multiple BWPs, PSFCH resources may be associated with corresponding BWP IDs.

Implementation 4: The highest bit of the PSFCH resource configuration information corresponds to the upper boundary of the BWP. When there are multiple BWPs, PSFCH resources may be associated with corresponding BWP IDs.

Implementation 5: The bits of the PSFCH resource configuration information have a specific relationship with a frequency domain location Q of the BWP. For example, RBs corresponding to the bitmap of the PSFCH resource configuration information are totally N RBs centered on Q. When there are multiple BWPs, PSFCH resources may be associated with corresponding BWP IDs.

Implementation 6: The lowest bit of the PSFCH resource configuration information corresponds to a reference point of an SL carrier. When there are multiple carriers, PSFCH resources may be associated with corresponding carrier identifiers.

Implementation 7: The bits of the PSFCH resource configuration information have a specific relationship with a frequency location of the SL carrier for SSB transmission. For example, RBs corresponding to the bitmap in the PSFCH are totally N RBs centered on the frequency location of the SL carrier for SSB transmission, and includes N RBs in total. When there are multiple carriers, PSFCH resources may be associated with corresponding carrier identifiers.

Implementation 8: Bits of the PSFCH resource configuration information are aligned with the lower boundary of the SL carrier.

Implementation 9: Bits of the PSFCH resource configuration information are aligned with the upper boundary of the SL carrier.

Implementation 10: A bitmap of size N includes N1 bitmaps of size N2, and each bitmap of size N2 corresponds to resource locations in one subchannel. N1×N2=N.

Embodiment 5 includes the following cases:
the bitmap indicates PSFCH resources in a carrier, in which case, bits corresponding to frequency domain resources in a resource pool indicates PSFCH resources in the resource pool; or
the bitmap indicates PSFCH resources in a resource pool, in which case, bits corresponding to frequency domain resources in a resource pool indicates PSFCH resources in the resource pool; or
the bitmap indicates PSFCH resources in a BWP, in which case, bits corresponding to frequency domain resources in a resource pool indicates PSFCH resources in the resource pool.

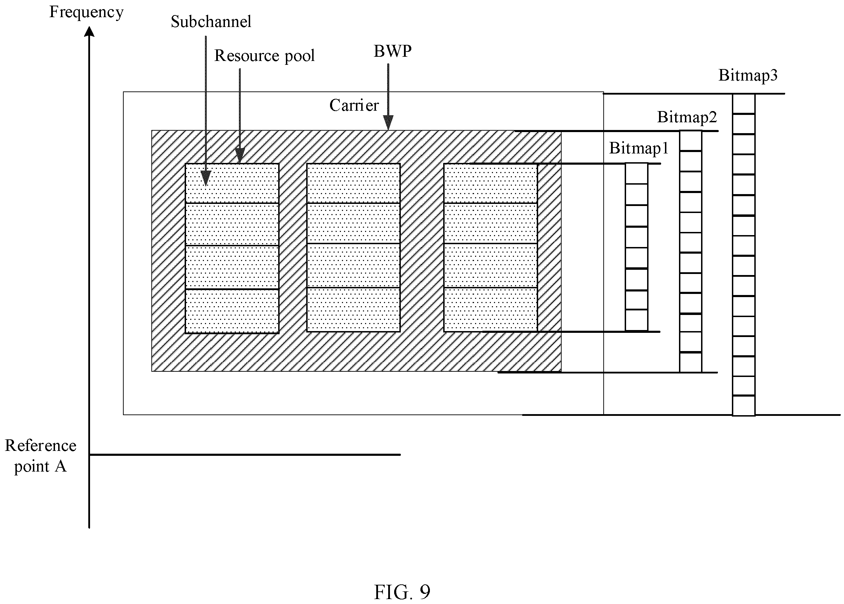

As shown in FIG. 9, for bitmap1, N=K (resource pool size); for bitmap2, N=K2 (BWP size); and for bitmap3, N=K3 (carrier size).

Embodiment 6: Signaling structure: specific signaling design of the PSFCH resource configuration information.

### Implementation 1:

Step 1: A base station directly indicates to UE that a resource pool size is K, or a BWP size is K2, or a carrier size is K3.

Step 2: The size of a bitmap of the PSFCH resource configuration information is N=K or K2 or K3, and the UE obtains indication about presence of PSFCH resources from K or K2 or K3 bits indication information. Bits of the PSFCH resource configuration information correspond to the upper and lower boundaries of the resource pool.

The following are possible configuration methods, where sl-PSFCH-RB-Set is the PSFCH resource configuration information.

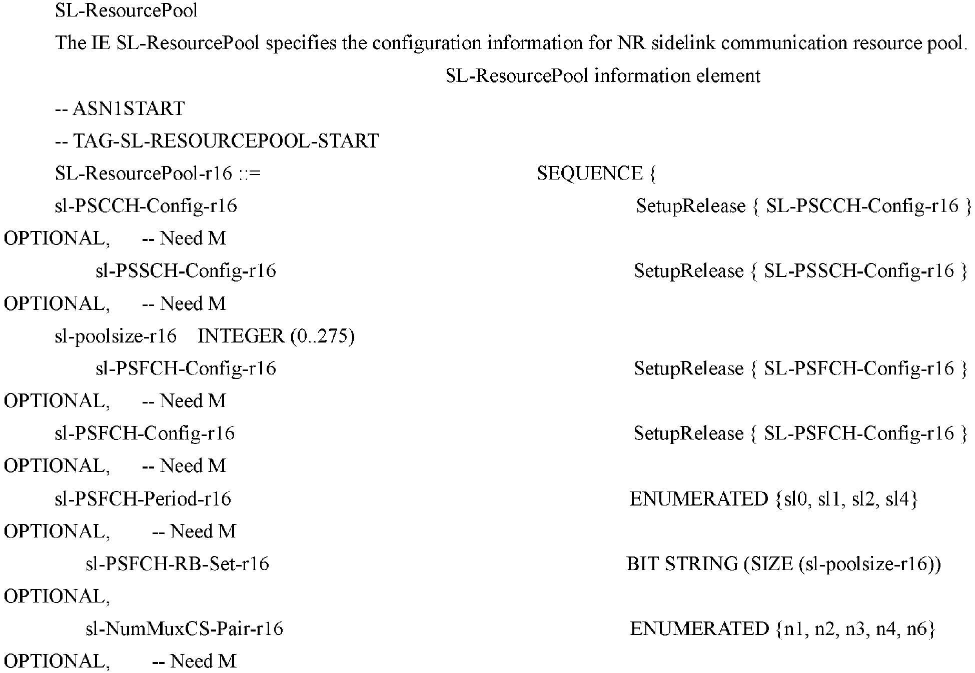

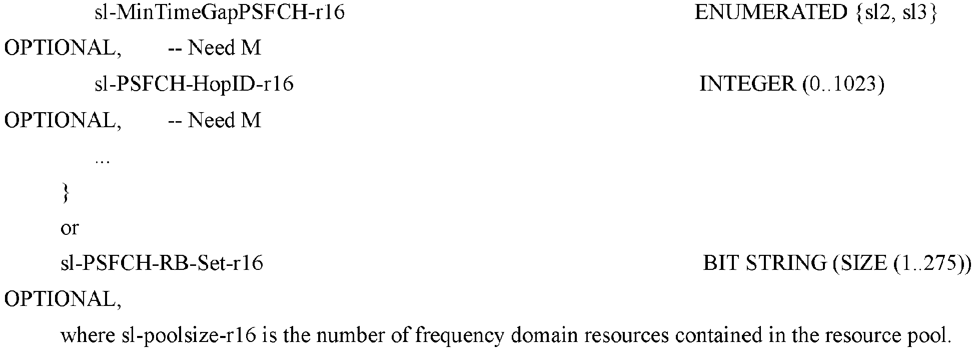

### Implementation 2:

The base station does not directly indicate the resource pool size to UE. The UE calculates the resource pool size K based on other configuration parameters, where the size of a bitmap corresponding to PSFCH resource locations is N=K; and the UE obtains indication about presence of PSFCH resources from K bits indication information. The PSFCH resource location are aligned with both the upper and lower boundaries of the resource pool.

The base station does not directly indicate the BWP size to UE. The UE calculates the BWP size K2 based on other configuration parameters, where the size of a bitmap corresponding to PSFCH resource locations is N=K2; and the UE obtains indication about presence of PSFCH resources from K2 bits indication information. The PSFCH resource locations are aligned with both the upper and lower boundaries of the BWP.

The base station does not directly indicate the carrier size to UE. The UE calculates the carrier size K3 based on other configuration parameters, where the size of a bitmap corresponding to PSFCH resource locations is N=K3; and the UE obtains indication about presence of PSFCH resources from K3 bits indication information. The PSFCH resource location are aligned with both the upper and lower boundaries of the carrier.

Implementation 3: A bitmap of size N of the UE includes N1 bitmaps of size N2, where N1 is the number of subchannels, N2 is the number of resources in one subchannel, and each bitmap of size N2 corresponds to resources in one subchannel. N=K or K2 or K3, and N=N1×N2.

### Implementation 4:

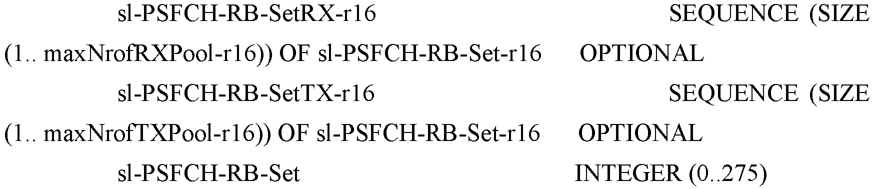

### Corresponding resource pool order:

### Implementation 5:

Because the subchannel size is 10 RBs, 15 RBs, 20 RBs, 25 RBs, 50 RBs, 75 RBs, or 100 RBs, the number of subchannels contained in one resource pool is 1 to 27.

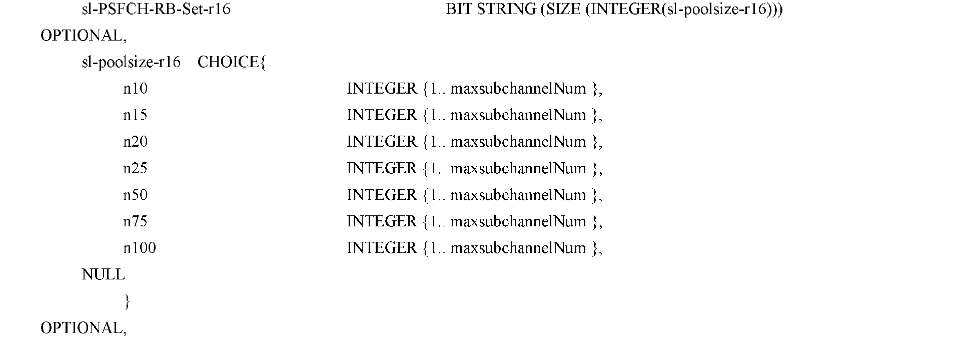

where n10, n15, n20, n25, n50, n75, n100 correspond to subchannel sizes; 1..maxsubchannelNum corresponds to the number of subchannels; maxsubchannelNum is the maximum number of subchannels, for example, 27; sl-poolsize-r16 is a product of channel size and channel quantity, or sl-poolsize-r16=NULL means there is no PSFCH; and the length of the PSFCH configuration information is sl-poolzise-r16.

### Implementation 6:

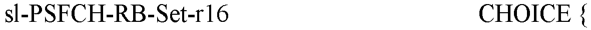

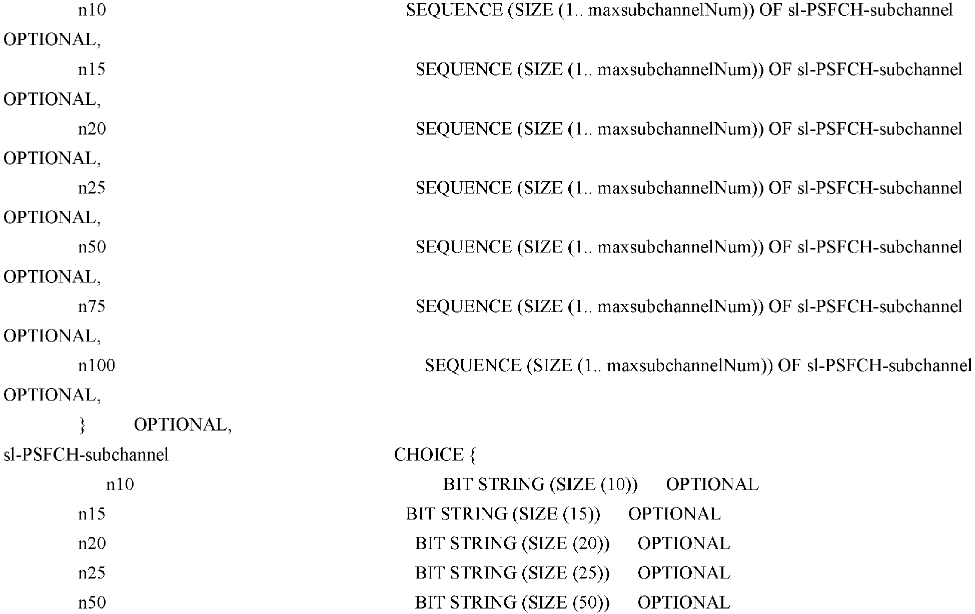

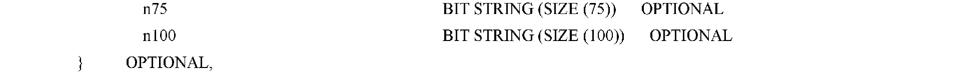

where n10, n15, n20, n25, n50, n75, n100 correspond to subchannel sizes; 1..maxsubchannelNum corresponds to the number of subchannels; maxsubchannelNum is the maximum number of subchannels, for example 27; and sl-PSFCH-subchannel is a bitmap corresponding to PSFCH resources in a subchannel.

Embodiment 7: The PSFCH resource configuration information is configured using a series of parameters.

The PSFCH resource location is configured using at least one of the following parameters:
start location of RBs corresponding to PSFCH resources;
number NUM of RBs occupied by PSFCH resources;
reference RB corresponding to PSFCH resources;
resource pool identifier corresponding to PSFCH resources;
start subchannel corresponding to PSFCH resources; and
number of occupied subchannels corresponding to PSFCH resources.

If NUM has been configured, NUM RBs starting from the lowest RB or the highest RB of the carrier or BWP or resource pool may be PSFCH resources by default, and whether the lowest or highest RB is used may be prescribed in a protocol.

If NUM and a reference RB have been configured, NUM RBs starting from the reference RB of the carrier or BWP or resource pool may be PSFCH resources by default.

In the embodiments of the present invention, the PSFCH resource locations are indicated by a bitmap of size N, where N is a fixed value, and the lower (upper) boundary of the bitmap corresponds to the lower (upper) boundary of the resource pool; or the lower (upper) boundary of the bitmap may correspond to the upper (lower) boundary of the BWP or carrier; and the number of bits included in the bitmap may be determined dynamically based on the configured resource pool size. Based on the embodiments of the present invention, the UE can correctly understand the locations of PSFCH resources where to transmit or receive corresponding feedback.

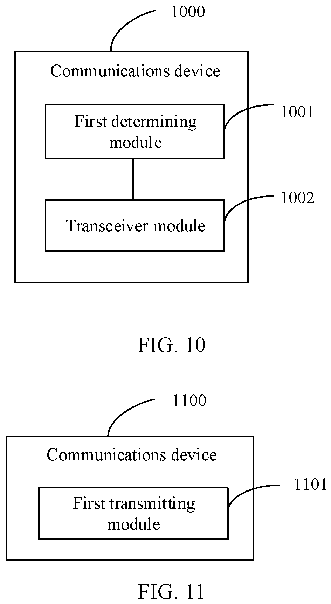

Referring to FIG. 10, FIG. 10 is a first structural diagram of a communications device according to an embodiment of the present invention. The communications device shown in FIG. 10 is the first communications device in the foregoing method embodiment. As shown in FIG. 10, the communications device 1000 includes:
a first determining module 1001, configured to determine PSFCH resources in a target object based on obtained PSFCH resource configuration information, where the target object includes at least one of the following: a carrier, a bandwidth part BWP, and a resource pool, and the PSFCH resources include PSFCH transmission resources, or PSFCH reception resources, or both PSFCH tranmission resources and PSFCH reception resources; and
a transceiver module 1002, configured to perform a target operation on feedback information on the PSFCH resources, where the target operation includes at least one of a reception operation and a transmission operation.

Optionally, in a case that PSFCH resources are configured through bits of the PSFCH resource configuration information, there is a first correspondence between the bits of the PSFCH resource configuration information and frequency domain resources in the target resource, and the target resource is any one of the following: a carrier, a BWP, or a resource pool.

Optionally, the PSFCH resource configuration information includes L bits, and L satisfies any one of the following:
a value of L is equal to a first number, where the first number is the number of actual frequency domain resources in the target resource or the maximum possible number of frequency domain resources in the target resource; or
L is a positive integer.

Optionally, the first correspondence satisfies any one of the following:
the (p+a)-th bit of the bits of the PSFCH resource configuration information that are arranged in ascending order of numbers corresponds to the p-th frequency domain resource of the frequency domain resources in the target resource that are arranged in ascending order of numbers;
the (p+a)-th bit of the bits of the PSFCH resource configuration information that are arranged in descending order of numbers corresponds to the p-th frequency domain resource of the frequency domain resources in the target resource that are arranged in descending order of numbers;
the (p+a)-th bit of the bits of the PSFCH resource configuration information that are arranged in descending order of numbers corresponds to the p-th frequency domain resource of the frequency domain resources in the target resource that are arranged in ascending order of numbers;
the (p+a)-th bit of the bits of the PSFCH resource configuration information that are arranged in ascending order of numbers corresponds to the p-th frequency domain resource of the frequency domain resources in the target resource that are arranged in descending order of numbers; or
the (p+a)-th bit of the bits of the PSFCH resource configuration information that are arranged in ascending order of numbers corresponds to a first frequency domain resource in the target resource, and bits corresponding to the target resource are contiguous; where
p is an integer ranging from 1 to K, and K is the number of actual frequency domain resources in the target resource; and p+a is an integer ranging from 1 to L, L is the number of bits included in the PSFCH resource configuration information, and a is a natural number.

Optionally, the first frequency domain resource satisfies at least one of the following:
in a case that the target resource is a carrier or a BWP, the first frequency domain resource is: a reference resource of the target resource, or a specified frequency domain location in at least one frequency domain location of the target resource for synchronization signal block SSB transmission; and
the first frequency domain resource is a central frequency domain resource in the target resource.

Optionally, the first determining module 1001 includes:
a first determining unit, configured to determine bits of the PSFCH resource configuration information that correspond to frequency domain resources in the target object as first target bits; and
a second determining unit, configured to determine PSFCH resources in the target object based on each value of the first target bits; where
in a case that a first bit in the first target bits takes a first value, determine that a second frequency domain resource corresponding to the first bit in the target object is a PSFCH resource; and in a case that the first bit takes a second value, determine that the second frequency domain resource is not a PSFCH resource.

Optionally, in a case that the PSFCH resource configuration information further includes second target bits other than the first target bits, the communications device 1000 further includes:
a processing module, configured to ignore the second target bits.

Optionally, in a case that the target object further includes a third frequency domain resource and the third frequency domain resource corresponds to none of the bits of the PSFCH resource configuration information, the communications device further includes:
a second determining module, configured to perform any one of the following: determining that the third frequency domain resource is a PSFCH resource; or determining that the third frequency domain resource is not a PSFCH resource.

Optionally, in a case that a value of L is equal to a first number and the first number is the number of actual frequency domain resources in the target resource, the communications device 1000 further includes:
a receiving module, configured to receive first information, where the first information is used to indicate the number of actual frequency domain resources in the target resource; or the first information is used to indicate a first parameter which is used for calculating the number of actual frequency domain resources in the target resource; and
the first determining module is specifically configured to determine the PSFCH resources in the target object based on the obtained PSFCH resource configuration information and the first information.

Optionally, in a case that a value of L is equal to a first number and the first number is the number of actual frequency domain resources in the target resource, the PSFCH resource configuration information includes any one of the following:
a first bitmap or first bit string with L bits; or
N1 second bitmaps or second bit strings, where each of the second bitmaps or each of the second bit strings includes N2 bits, and L=N1×N2.

Optionally, the target resource includes N1 first resources, and the number of actual frequency domain resources in each of the first resources is equal to N2.

Optionally, the target resource satisfies at least one of the following:
in a case that the target object is a resource pool, the target resource is any one of the following: a carrier in which the target object is located, a BWP in which the target object is located, and a resource pool;
in a case that the target object is a BWP, the target resource is a BWP or a carrier in which the target object is located; and
in a case that the target object is a carrier, the target resource is a carrier.

Optionally, the PSFCH resource configuration information is used to indicate at least one of the following:
a start resource of PSFCH resources in the target object;
a resource number K of PSFCH resources in the target object;
a reference resource of PSFCH resources in the target object;
the target object;
a start subchannel of PSFCH resources in the target object; and
the number of subchannels included in PSFCH resources in the target object.

Optionally, the first determining module is specifically configured to determine K contiguous frequency domain resources starting from a fifth frequency domain resource of the frequency domain resources in the target object as PSFCH resources, where
the fifth frequency domain resource is any one of the following: the 1-st frequency domain resource or the last frequency domain resource of the frequency domain resources in the target object that are arranged in descending order of numbers; the reference resource indicated in the PSFCH resource configuration information; or the start resource indicated in the PSFCH resource configuration information.

The communications device 1000 is capable of implementing the processes implemented by the first communications device in the method embodiment of this disclosure, with the same beneficial effects achieved. To avoid repetition, details are not described herein again.

Referring to FIG. 11, FIG. 11 is a second structural diagram of a communications device according to an embodiment of the present invention. The communications device shown in FIG. 11 is the second communications device in the foregoing method embodiment. As shown in FIG. 11, the communications device 1100 includes:
a first transmitting module 1101, configured to transmit PSFCH resource configuration information to a first communications device, where the PSFCH resource configuration information is used for determining and configuring PSFCH resources in a target object; the target object includes at least one of the following: a carrier, a bandwidth part BWP, and a resource pool; and the PSFCH resources include PSFCH transmission resources, or PSFCH reception resources, or both PSFCH tranmission resources and PSFCH reception resources.

Optionally, in a case that PSFCH resources are configured through bits of the PSFCH resource configuration information, there is a first correspondence between the bits of the PSFCH resource configuration information and frequency domain resources in the target resource, and the target resource is any one of the following: a carrier, a BWP, or a resource pool.

Optionally, the PSFCH resource configuration information includes L bits, and L satisfies any one of the following:
a value of L is equal to a first number, where the first number is the number of actual frequency domain resources in the target resource or the maximum possible number of frequency domain resources in the target resource; or
L is a positive integer.

Optionally, the first correspondence satisfies any one of the following:
the (p+a)-th bit of the bits of the PSFCH resource configuration information that are arranged in ascending order of numbers corresponds to the p-th frequency domain resource of the frequency domain resources in the target resource that are arranged in ascending order of numbers;
the (p+a)-th bit of the bits of the PSFCH resource configuration information that are arranged in descending order of numbers corresponds to the p-th frequency domain resource of the frequency domain resources in the target resource that are arranged in descending order of numbers;
the (p+a)-th bit of the bits of the PSFCH resource configuration information that are arranged in descending order of numbers corresponds to the p-th frequency domain resource of the frequency domain resources in the target resource that are arranged in ascending order of numbers;
the (p+a)-th bit of the bits of the PSFCH resource configuration information that are arranged in ascending order of numbers corresponds to the p-th frequency domain resource of the frequency domain resources in the target resource that are arranged in descending order of numbers; or
the (p+a)-th bit of the bits of the PSFCH resource configuration information that are arranged in ascending order of numbers corresponds to a first frequency domain resource in the target resource, and bits corresponding to the target resource are contiguous; where
p is an integer ranging from 1 to K, and K is the number of actual frequency domain resources in the target resource; and p+a is an integer ranging from 1 to L, L is the number of bits included in the PSFCH resource configuration information, and a is a natural number.

Optionally, the first frequency domain resource satisfies at least one of the following:
in a case that the target resource is a carrier or a BWP, the first frequency domain resource is: a reference resource of the target resource, or a specified frequency domain location in at least one frequency domain location of the target resource for synchronization signal block SSB transmission; and
the first frequency domain resource is a central frequency domain resource in the target resource.

Optionally, in a case that a value of L is equal to a first number and the first number is the number of actual frequency domain resources in the target resource, the communications device 1100 further includes:
a second transmitting module, configured to transmit first information to the first communications device, where the first information is used to indicate the number of actual frequency domain resources in the target resource; or the first information is used to indicate a first parameter which is used for calculating the number of actual frequency domain resources in the target resource.

Optionally, in a case that a value of L is equal to a first number and the first number is the number of actual frequency domain resources in the target resource, the PSFCH resource configuration information includes any one of the following:
a first bitmap or first bit string with L bits; or
N1 second bitmaps or second bit strings, where each of the second bitmaps or each of the second bit strings includes N2 bits, and L=N1×N2.

Optionally, the target resource includes N1 first resources, and the number of actual frequency domain resources in each of the first resources is equal to N2.

Optionally, the target resource satisfies at least one of the following:
in a case that the target object is a resource pool, the target resource is any one of the following: a carrier in which the target object is located, a BWP in which the target object is located, and a resource pool;
in a case that the target object is a BWP, the target resource is a BWP or a carrier in which the target object is located; and
in a case that the target object is a carrier, the target resource is a carrier.

Optionally, the PSFCH resource configuration information is used to indicate at least one of the following:
a start resource of PSFCH resources in the target object;
a resource number K of PSFCH resources in the target object;
a reference resource of PSFCH resources in the target object;
the target object;
a start subchannel of PSFCH resources in the target object; and
the number of subchannels included in PSFCH resources in the target object.

The communications device 1100 is capable of implementing the processes implemented by the second communications device in the method embodiment of this disclosure, with the same beneficial effects achieved. To avoid repetition, details are not described herein again.

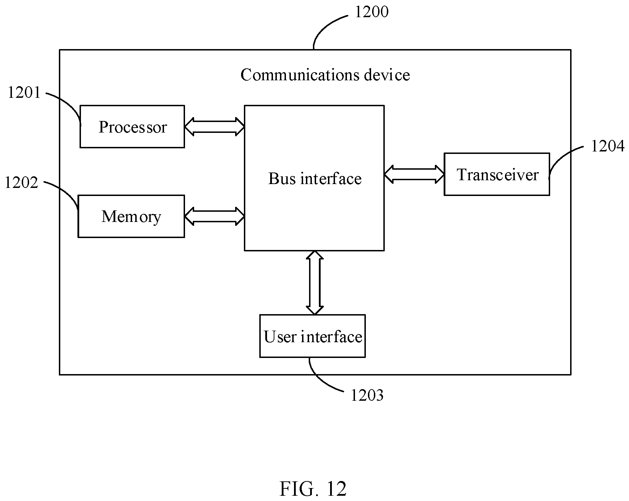

Referring to FIG. 12, FIG. 12 is a third structural diagram of a communications device according to an embodiment of the present invention. As shown in FIG. 12, the communications device 1200 includes a processor 1201, a memory 1202, a user interface 1203, a transceiver 1204, and a bus interface.

In this embodiment of the present invention, the communications device 1200 further includes: a computer program stored in the memory 1202 and capable of running on the processor 1201.
I. The communications device 1200 is the first communications device in the foregoing method embodiment.

When the computer program is executed by the processor 1201, the following steps are implemented:
determining PSFCH resources in a target object based on obtained PSFCH resource configuration information, where the target object includes at least one of the following: a carrier, a bandwidth part BWP, and a resource pool, and the PSFCH resources include PSFCH transmission resources, or PSFCH reception resources, or both PSFCH tranmission resources and PSFCH reception resources; and
performing a target operation on feedback information on the PSFCH resource via the transceiver 1204, where the target operation includes at least one of a reception operation and a transmission operation.

Optionally, in a case that PSFCH resources are configured through bits of the PSFCH resource configuration information, there is a first correspondence between the bits of the PSFCH resource configuration information and frequency domain resources in the target resource, and the target resource is any one of the following: a carrier, a BWP, or a resource pool.

Optionally, the PSFCH resource configuration information includes L bits, and L satisfies any one of the following:
a value of L is equal to a first number, where the first number is the number of actual frequency domain resources in the target resource or the maximum possible number of frequency domain resources in the target resource; or
L is a positive integer.

Optionally, the first correspondence satisfies any one of the following:
the (p+a)-th bit of the bits of the PSFCH resource configuration information that are arranged in ascending order of numbers corresponds to the p-th frequency domain resource of the frequency domain resources in the target resource that are arranged in ascending order of numbers;
the (p+a)-th bit of the bits of the PSFCH resource configuration information that are arranged in descending order of numbers corresponds to the p-th frequency domain resource of the frequency domain resources in the target resource that are arranged in descending order of numbers;
the (p+a)-th bit of the bits of the PSFCH resource configuration information that are arranged in descending order of numbers corresponds to the p-th frequency domain resource of the frequency domain resources in the target resource that are arranged in ascending order of numbers;
the (p+a)-th bit of the bits of the PSFCH resource configuration information that are arranged in ascending order of numbers corresponds to the p-th frequency domain resource of the frequency domain resources in the target resource that are arranged in descending order of numbers; or
the (p+a)-th bit of the bits of the PSFCH resource configuration information that are arranged in ascending order of numbers corresponds to a first frequency domain resource in the target resource, and bits corresponding to the target resource are contiguous; where
p is an integer ranging from 1 to K, and K is the number of actual frequency domain resources in the target resource; and p+a is an integer ranging from 1 to L, L is the number of bits included in the PSFCH resource configuration information, and a is a natural number.

Optionally, the first frequency domain resource satisfies at least one of the following:
in a case that the target resource is a carrier or a BWP, the first frequency domain resource is: a reference resource of the target resource, or a specified frequency domain location in at least one frequency domain location of the target resource for synchronization signal block SSB transmission; and
the first frequency domain resource is a central frequency domain resource in the target resource.

Optionally, when the computer program is executed by the processor 1201, the following steps may be further implemented:
determining bits of the PSFCH resource configuration information that correspond to frequency domain resources in the target object as first target bits; and
determining PSFCH resources in the target object based on each value of the first target bits; where
in a case that a first bit in the first target bits takes a first value, determining that a second frequency domain resource corresponding to the first bit in the target object is a PSFCH resource; and in a case that the first bit takes a second value, determining that the second frequency domain resource is not a PSFCH resource.

Optionally, in a case that the PSFCH resource configuration information further includes second target bits other than the first target bits, when the computer program is executed by the processor 1201, the following step may also be implemented:
ignoring the second target bits.

Optionally, in a case that the target object further includes a third frequency domain resource and the third frequency domain resource corresponds to none of the bits of the PSFCH resource configuration information, when the computer program is executed by the processor 1201, any one of the following may be implemented: determining that the third frequency domain resource is a PSFCH resource; or determining that the third frequency domain resource is not a PSFCH resource.

Optionally, in a case that a value of L is equal to a first number and the first number is the number of actual frequency domain resources in the target resource, when the computer program is executed by the processor 1201, the following step may also be implemented:
receiving first information via the transceiver 1204, where the first information is used to indicate the number of actual frequency domain resources in the target resource; or the first information is used to indicate a first parameter which is used for calculating the number of actual frequency domain resources in the target resource; and
determining the PSFCH resources in the target object based on the obtained PSFCH resource configuration information and the first information.

Optionally, in a case that a value of L is equal to a first number and the first number is the number of actual frequency domain resources in the target resource, the PSFCH resource configuration information includes any one of the following:
a first bitmap or first bit string with L bits; or
N1 second bitmaps or second bit strings, where each of the second bitmaps or each of the second bit strings includes N2 bits, and L=N1×N2.

Optionally, the target resource includes N1 first resources, and the number of actual frequency domain resources in each of the first resources is equal to N2.

Optionally, the target resource satisfies at least one of the following:
in a case that the target object is a resource pool, the target resource is any one of the following: a carrier in which the target object is located, a BWP in which the target object is located, and a resource pool;
in a case that the target object is a BWP, the target resource is a BWP or a carrier in which the target object is located; and
in a case that the target object is a carrier, the target resource is a carrier.

Optionally, the PSFCH resource configuration information is used to indicate at least one of the following:
a start resource of PSFCH resources in the target object;
a resource number K of PSFCH resources in the target object;
a reference resource of PSFCH resources in the target object;
the target object;
a start subchannel of PSFCH resources in the target object; and
the number of subchannels included in PSFCH resources in the target object.

Optionally, when the computer program is executed by the processor 1201, the following steps may be further implemented:
determining K contiguous frequency domain resources starting from a fifth frequency domain resource of the frequency domain resources in the target object as PSFCH resources, where
the fifth frequency domain resource is any one of the following: the 1-st frequency domain resource or the last frequency domain resource of the frequency domain resources in the target object that are arranged in descending order of numbers; the reference resource indicated in the PSFCH resource configuration information; or the start resource indicated in the PSFCH resource configuration information.

In this case, the communications device 1200 can implement the processes implemented by the first communications device in the foregoing method embodiments. To avoid repetition, details are not described herein again.

II. The communications device 1200 is the second communications device in the foregoing method embodiment.

When the computer program is executed by the processor 1201, the following steps are implemented:
transmitting PSFCH resource configuration information to a first communications device via the transceiver 1204, where the PSFCH resource configuration information is used for determining and configuring PSFCH resources in a target object; the target object includes at least one of the following: a carrier, a bandwidth part BWP, and a resource pool; and the PSFCH resources include PSFCH transmission resources, or PSFCH reception resources, or both PSFCH tranmission resources and PSFCH reception resources.

Optionally, in a case that PSFCH resources are configured through bits of the PSFCH resource configuration information, there is a first correspondence between the bits of the PSFCH resource configuration information and frequency domain resources in the target resource, and the target resource is any one of the following: a carrier, a BWP, or a resource pool.

Optionally, the PSFCH resource configuration information includes L bits, and L satisfies any one of the following:
a value of L is equal to a first number, where the first number is the number of actual frequency domain resources in the target resource or the maximum possible number of frequency domain resources in the target resource; or
L is a positive integer.

Optionally, the first correspondence satisfies any one of the following:
the (p+a)-th bit of the bits of the PSFCH resource configuration information that are arranged in ascending order of numbers corresponds to the p-th frequency domain resource of the frequency domain resources in the target resource that are arranged in ascending order of numbers;
the (p+a)-th bit of the bits of the PSFCH resource configuration information that are arranged in descending order of numbers corresponds to the p-th frequency domain resource of the frequency domain resources in the target resource that are arranged in descending order of numbers;
the (p+a)-th bit of the bits of the PSFCH resource configuration information that are arranged in descending order of numbers corresponds to the p-th frequency domain resource of the frequency domain resources in the target resource that are arranged in ascending order of numbers;
the (p+a)-th bit of the bits of the PSFCH resource configuration information that are arranged in ascending order of numbers corresponds to the p-th frequency domain resource of the frequency domain resources in the target resource that are arranged in descending order of numbers; or
the (p+a)-th bit of the bits of the PSFCH resource configuration information that are arranged in ascending order of numbers corresponds to a first frequency domain resource in the target resource, and bits corresponding to the target resource are contiguous; where
p is an integer ranging from 1 to K, and K is the number of actual frequency domain resources in the target resource; and p+a is an integer ranging from 1 to L, L is the number of bits included in the PSFCH resource configuration information, and a is a natural number.

Optionally, the first frequency domain resource satisfies at least one of the following:
in a case that the target resource is a carrier or a BWP, the first frequency domain resource is: a reference resource of the target resource, or a specified frequency domain location in at least one frequency domain location of the target resource for synchronization signal block SSB transmission; and
the first frequency domain resource is a central frequency domain resource in the target resource.

Optionally, in a case that a value of L is equal to a first number and the first number is the number of actual frequency domain resources in the target resource, when the computer program is executed by the processor 1201, the following step may also be implemented:
transmitting first information to the first communications device via the transceiver 1204, where the first information is used to indicate the number of actual frequency domain resources in the target resource; or the first information is used to indicate a first parameter which is used for calculating the number of actual frequency domain resources in the target resource.

Optionally, in a case that a value of L is equal to a first number and the first number is the number of actual frequency domain resources in the target resource, the PSFCH resource configuration information includes any one of the following:
a first bitmap or first bit string with L bits; or
N1 second bitmaps or second bit strings, where each of the second bitmaps or each of the second bit strings includes N2 bits, and L=N1×N2.

Optionally, the target resource includes N1 first resources, and the number of actual frequency domain resources in each of the first resources is equal to N2.

Optionally, the target resource satisfies at least one of the following:
in a case that the target object is a resource pool, the target resource is any one of the following: a carrier in which the target object is located, a BWP in which the target object is located, and a resource pool;
in a case that the target object is a BWP, the target resource is a BWP or a carrier in which the target object is located; and
in a case that the target object is a carrier, the target resource is a carrier.

Optionally, the PSFCH resource configuration information is used to indicate at least one of the following:
a start resource of PSFCH resources in the target object;
a resource number K of PSFCH resources in the target object;
a reference resource of PSFCH resources in the target object;
the target object;
a start subchannel of PSFCH resources in the target object; and
the number of subchannels included in PSFCH resources in the target object.

In this case, the communications device 1200 can implement the processes implemented by the second communications device in the foregoing method embodiments. To avoid repetition, details are not described herein again.

In FIG. 12, a bus architecture may include any quantity of interconnected buses and bridges, and specifically connect together various circuits of one or more processors represented by the processor 1201 and a memory represented by the memory 1202. The bus architecture may further interconnect various other circuits such as a peripheral device, a voltage regulator, and a power management circuit. These are all well known in the art, and therefore are not further described in this specification. The bus interface provides interfaces. The transceiver 1204 may be a plurality of elements, including a transmitter and a receiver, and provides units for communicating with a variety of other apparatuses over a transmission medium. For different user equipments, the user interface 1203 may be an interface capable of externally or internally connecting a required device, where the connected device includes but is not limited to a keypad, a display, a speaker, a microphone, a joystick, and the like.

The processor 1201 is responsible for managing the bus architecture and general processing, and the memory 1202 may store data for use by the processor 2601 to perform an operation.

An embodiment of the present invention further provides a computer-readable storage medium, where a computer program is stored in the computer-readable storage medium. When the computer program is executed by a processor, the processes of the foregoing embodiment of the method for determining PSFCH resources or the foregoing embodiment of the method for configuring PSFCH resources are implemented, with the same technical effects achieved. To avoid repetition, details are not described herein again. For example, the computer-readable storage medium is a read-only memory (Read-Only Memory, ROM), a random access memory (Random Access Memory, RAM), a magnetic disk, or an optical disc.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be indirect couplings or communication connections via some interfaces, apparatuses, or units, and may be implemented in electrical, mechanical, or other forms.

The units described as separate parts may or may not be physically separate, and parts displayed as units may or may not be physical units, meaning they may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

According to the description of the foregoing embodiments, persons skilled in the art can clearly understand that the method in the foregoing embodiments may be implemented by software plus a necessary universal hardware platform or by hardware only. In most cases, the former is a preferred implementation. Based on such an understanding, the technical solutions of the present invention essentially, or the part contributing to the prior art may be implemented in a form of a software product. The software product is stored in a storage medium (for example, ROM/RAM, a magnetic disk, or an optical disc), and includes several instructions for instructing a terminal (which may be a mobile phone, a computer, a server, an air conditioner, a network device, or the like) to perform the method described in the embodiments of the present invention.

A person of ordinary skill in the art may understand that all or some of the processes of the methods in the embodiments may be implemented by a computer program controlling relevant hardware. The program may be stored in a computer-readable storage medium. When the program runs, the processes of the methods in the embodiments are performed. The storage medium may be a magnetic disk, an optical disc, a read-only memory (Read-Only Memory, ROM), a random access memory (Random Access Memory, RAM), or the like.

It can be understood that the embodiments described in the embodiments of this disclosure may be implemented by hardware, software, firmware, middleware, microcode, or a combination thereof. For hardware implementation, the module, unit, and subunit may be implemented in one or more application-specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the techniques described in the embodiments of this disclosure may be implemented by modules (for example, procedures or functions) that perform the functions described in the embodiments of this disclosure. Software code may be stored in the memory and executed by the processor. The memory may be implemented in or outside the processor. The scope of protection is defined by the appended claims.

## Claims

1. A method for determining physical sidelink feedback channel, PSFCH, resources performed by a first communications device, comprising:
receiving PSFCH resource configuration information from a second communications device;
determining (201) PSFCH resources in a target object based on the received PSFCH resource configuration information, wherein the target object comprises at least one of the following: a carrier, a bandwidth part, BWP, and a resource pool, and the PSFCH resources comprise PSFCH transmission resources, or PSFCH reception resources, or both PSFCH tranmission resources and PSFCH reception resources; and
performing (202) a target operation on feedback information on the PSFCH resources, wherein the target operation comprises at least one of a reception operation and a transmission operation;
**characterized in that**:
the PSFCH resource configuration information is used to at least indicate a resource number K of PSFCH resources in the target object;
the determining PSFCH resources in a target object based on obtained PSFCH resource configuration information comprises:
determining K contiguous frequency domain resources starting from a fifth frequency domain resource of the frequency domain resources in the target object as PSFCH resources, wherein
the fifth frequency domain resource is any one of the following: the 1-st frequency domain resource or the last frequency domain resource of the frequency domain resources in the target object that are arranged in descending order of numbers; a reference resource indicated in the PSFCH resource configuration information; or a start resource indicated in the PSFCH resource configuration information.

2. The method according to claim 1, wherein in a case that the PSFCH resources are configured through bits of the PSFCH resource configuration information, there is a first correspondence between the bits of the PSFCH resource configuration information and frequency domain resources in a target resource, and the target resource is any one of the following: a carrier, a BWP, or a resource pool.

3. The method according to claim 2, wherein the PSFCH resource configuration information comprises L bits, and L satisfies any one of the following:
a value of L is equal to a first number, wherein the first number is the number of actual frequency domain resources in the target resource or the maximum possible number of frequency domain resources in the target resource; or
L is a positive integer; and/or
wherein the target resource satisfies at least one of the following:
in a case that the target object is a resource pool, the target resource is any one of the following: a carrier in which the target object is located, a BWP in which the target object is located, and a resource pool;
in a case that the target object is a BWP, the target resource is a BWP or a carrier in which the target object is located; and
in a case that the target object is a carrier, the target resource is a carrier.

4. The method according to claim 2, wherein the first correspondence satisfies any one of the following:
the (p+a)-th bit of the bits of the PSFCH resource configuration information that are arranged in ascending order of numbers corresponds to the p-th frequency domain resource of the frequency domain resources in the target resource that are arranged in ascending order of numbers;
the (p+a)-th bit of the bits of the PSFCH resource configuration information that are arranged in descending order of numbers corresponds to the p-th frequency domain resource of the frequency domain resources in the target resource that are arranged in descending order of numbers;
the (p+a)-th bit of the bits of the PSFCH resource configuration information that are arranged in descending order of numbers corresponds to the p-th frequency domain resource of the frequency domain resources in the target resource that are arranged in ascending order of numbers;
the (p+a)-th bit of the bits of the PSFCH resource configuration information that are arranged in ascending order of numbers corresponds to the p-th frequency domain resource of the frequency domain resources in the target resource that are arranged in descending order of numbers;
the (p+a)-th bit of the bits of the PSFCH resource configuration information that are arranged in ascending order of numbers corresponds to a first frequency domain resource in the target resource, and bits corresponding to the target resource are contiguous; or
the (p+a)-th bit of the bits of the PSFCH resource configuration information that are arranged in descending order of numbers corresponds to a first frequency domain resource in the target resource, and bits corresponding to the target resource are contiguous; wherein
p is an integer ranging from 1 to K, and K is the number of actual frequency domain resources in the target resource; and p+a is an integer ranging from 1 to L, L is the number of bits comprised in the PSFCH resource configuration information, and a is a natural number,
wherein the first frequency domain resource satisfies at least one of the following:
in a case that the target resource is a carrier or a BWP, the first frequency domain resource is: a reference resource of the target resource, or a specified frequency domain location in at least one frequency domain location of the target resource for synchronization signal block, SSB, transmission; and
the first frequency domain resource is a central frequency domain resource in the target resource.

5. The method according to any one of claims 2 to 4, wherein the determining PSFCH resources in a target object based on obtained PSFCH resource configuration information comprises:
determining bits of the PSFCH resource configuration information that correspond to frequency domain resources in the target object as first target bits; and
determining PSFCH resources in the target object based on each value of the first target bits; wherein
in a case that a first bit in the first target bit takes a first value, determining that a second frequency domain resource corresponding to the first bit in the target object is a PSFCH resource; and in a case that the first bit takes a second value, determining that the second frequency domain resource is not a PSFCH resource,
wherein in a case that the PSFCH resource configuration information further comprises second target bits other than the first target bits, the method further comprises:
ignoring the second target bits, or
wherein in a case that the target object further comprises a third frequency domain resource and the third frequency domain resource corresponds to none of the bits of the PSFCH resource configuration information, the method further comprises any one of the following:
determining that the third frequency domain resource is a PSFCH resource; or
determining that the third frequency domain resource is not a PSFCH resource.

6. The method according to claim 3, wherein in a case that a value of L is equal to a first number and the first number is the number of actual frequency domain resources in the target resource, before the determining PSFCH resources in a target object based on obtained PSFCH resource configuration information, the method further comprises:
receiving first information, wherein the first information is used to indicate the number of actual frequency domain resources in the target resource; or the first information is used to indicate a first parameter which is used for calculating the number of actual frequency domain resources in the target resource; and
the determining PSFCH resources in a target object based on obtained PSFCH resource configuration information comprises:
determining the PSFCH resources in the target object based on the obtained PSFCH resource configuration information and the first information, or
wherein in a case that a value of L is equal to a first number and the first number is the number of actual frequency domain resources in the target resource, the PSFCH resource configuration information comprises any one of the following:
a first bitmap or first bit string with L bits; or
N1 second bitmaps or second bit strings, wherein each of the second bitmaps or each of the second bit strings comprises N2 bits, and L=N1×N2,
wherein the target resource comprises N1 first resources, and the number of actual frequency domain resources in each of the first resources is equal to N2.

7. The method according to claim 1, wherein the PSFCH resource configuration information is used to indicate at least one of the following:
a start resource of PSFCH resources in the target object;
a reference resource of PSFCH resources in the target object;
the target object;
a start subchannel of PSFCH resources in the target object; and
the number of subchannels comprised in PSFCH resources in the target object.

8. The method according to claim 1, wherein the PSFCH resource configuration information comprises a field description, the field description indicates any one of the following:
the set of PRBs that are actually used for PSFCH transmission and reception, the first PRB refers to the lowest RB index of the subchannel with the lowest index in the resource pool;
the set of PRBs that are actually used for PSFCH transmission and reception, the first bit refers to the RB with the lowest index in the resource pool.

9. A method for configuring physical sidelink feedback channel, PSFCH, resources performed by a second communications device, comprising:
transmitting (301) PSFCH resource configuration information to a first communications device, wherein the PSFCH resource configuration information is used for determining and configuring PSFCH resources in a target object; the target object comprises at least one of the following: a carrier, a bandwidth part, BWP, and a resource pool; and the PSFCH resources comprise PSFCH transmission resources, or PSFCH reception resources, or both PSFCH tranmission resources and PSFCH reception resources;
**characterized in that**:
the PSFCH resource configuration information is used to at least indicate a resource number K of PSFCH resources in the target object;
K contiguous frequency domain resources starting from a fifth frequency domain resource of the frequency domain resources in the target object is configured as PSFCH resources, wherein
the fifth frequency domain resource is any one of the following: the 1-st frequency domain resource or the last frequency domain resource of the frequency domain resources in the target object that are arranged in descending order of numbers; a reference resource indicated in the PSFCH resource configuration information; or a start resource indicated in the PSFCH resource configuration information.

10. The method according to claim 9, wherein in a case that the PSFCH resources are configured through bits of the PSFCH resource configuration information, there is a first correspondence between the bits of the PSFCH resource configuration information and frequency domain resources in a target resource, and the target resource is any one of the following: a carrier, a BWP, or a resource pool.

11. The method according to claim 10, wherein the PSFCH resource configuration information comprises L bits, and L satisfies any one of the following:
a value of L is equal to a first number, wherein the first number is the number of actual frequency domain resources in the target resource or the maximum possible number of frequency domain resources in the target resource; or
L is a positive integer.

12. The method according to claim 10, wherein the first correspondence satisfies any one of the following:
the (p+a)-th bit of the bits of the PSFCH resource configuration information that are arranged in ascending order of numbers corresponds to the p-th frequency domain resource of the frequency domain resources in the target resource that are arranged in ascending order of numbers;
the (p+a)-th bit of the bits of the PSFCH resource configuration information that are arranged in descending order of numbers corresponds to the p-th frequency domain resource of the frequency domain resources in the target resource that are arranged in descending order of numbers;
the (p+a)-th bit of the bits of the PSFCH resource configuration information that are arranged in descending order of numbers corresponds to the p-th frequency domain resource of the frequency domain resources in the target resource that are arranged in ascending order of numbers;
the (p+a)-th bit of the bits of the PSFCH resource configuration information that are arranged in ascending order of numbers corresponds to the p-th frequency domain resource of the frequency domain resources in the target resource that are arranged in descending order of numbers; or
the (p+a)-th bit of the bits of the PSFCH resource configuration information that are arranged in ascending order of numbers corresponds to a first frequency domain resource in the target resource, and bits corresponding to the target resource are contiguous; wherein
p is an integer ranging from 1 to K, and K is the number of actual frequency domain resources in the target resource; and p+a is an integer ranging from 1 to L, L is the number of bits comprised in the PSFCH resource configuration information, and a is a natural number,
wherein the first frequency domain resource satisfies at least one of the following:
in a case that the target resource is a carrier or a BWP, the first frequency domain resource is: a reference resource of the target resource, or a specified frequency domain location in at least one frequency domain location of the target resource for synchronization signal block SSB transmission; and
the first frequency domain resource is a central frequency domain resource in the target resource.

13. The method according to claim 11, wherein in a case that a value of L is equal to a first number and the first number is the number of actual frequency domain resources in the target resource, the method further comprises:
transmitting first information to the first communications device, wherein the first information is used to indicate the number of actual frequency domain resources in the target resource; or the first information is used to indicate a first parameter which is used for calculating the number of actual frequency domain resources in the target resource, or
wherein in a case that a value of L is equal to a first number and the first number is the number of actual frequency domain resources in the target resource, the PSFCH resource configuration information comprises any one of the following:
a first bitmap or first bit string with L bits; or
N1 second bitmaps or second bit strings, wherein each of the second bitmaps or each of the second bit strings comprises N2 bits, and L=N1×N2,
wherein the target resource comprises N1 first resources, and the number of actual frequency domain resources in each of the first resources is equal to N2.

14. The method according to claim 10, wherein the target resource satisfies at least one of the following:
in a case that the target object is a resource pool, the target resource is any one of the following: a carrier in which the target object is located, a BWP in which the target object is located, and a resource pool;
in a case that the target object is a BWP, the target resource is a BWP or a carrier in which the target object is located; and
in a case that the target object is a carrier, the target resource is a carrier.

15. The method according to claim 9, wherein the PSFCH resource configuration information is used to indicate at least one of the following:
a start resource of PSFCH resources in the target object;
a reference resource of PSFCH resources in the target object;
the target object;
a start subchannel of PSFCH resources in the target object; and
the number of subchannels comprised in PSFCH resources in the target object.

## Patentansprüche

1. Verfahren zum Bestimmen von physikalischen Sidelink-Rückkopplungskanal-, PSFCH-Ressourcen, das von einer ersten Kommunikationsvorrichtung durchgeführt wird, umfassend:
Empfangen von PSFCH-Ressourcen-Konfigurationsinformationen von einer zweiten Kommunikationsvorrichtung;
Bestimmen (201) von PSFCH-Ressourcen in einem Zielobjekt auf der Grundlage der empfangenen PSFCH-Ressourcenkonfigurationsinformationen, wobei das Zielobjekt mindestens eines der folgenden umfasst: einen Träger, einen Bandbreitenteil, BWP, und einen Ressourcenpool, und die PSFCH-Ressourcen PSFCH-Senderessourcen oder PSFCH-Empfängerressourcen oder sowohl PSFCH-Senderessourcen als auch PSFCH-Empfängerressourcen umfassen; und
Durchführen (202) einer Zieloperation auf Rückkopplungsinformationen über die PSFCH-Ressourcen, wobei die Zieloperation mindestens eine von einer Empfangsoperation und einer Sendeoperation umfasst;
**dadurch gekennzeichnet, dass**:
die PSFCH-Ressourcenkonfigurationsinformationen verwendet werden, um zumindest eine Ressourcennummer K von PSFCH-Ressourcen in dem Zielobjekt anzugeben;
das Bestimmen von PSFCH-Ressourcen in einem Zielobjekt auf der Grundlage von erhaltenen PSFCH-Ressourcen-Konfigurationsinformationen umfasst:
Bestimmen von K zusammenhängenden Frequenzdomänen-Ressourcen, beginnend mit einer fünften Frequenzdomänen-Ressource der Frequenzdomänen-Ressourcen in dem Zielobjekt als PSFCH-Ressourcen, wobei die fünfte Frequenzdomänen-Ressource eine der folgenden ist: die 1. Frequenzdomänen-Ressource oder die letzte Frequenzdomänen-Ressource der Frequenzdomänen-Ressourcen in dem Zielobjekt, die in absteigender Reihenfolge der Nummern angeordnet sind; eine Referenz-Ressource, die in den PSFCH-Ressourcen-Konfigurationsinformationen angegeben ist; oder eine Start-Ressource, die in den PSFCH-Ressourcen-Konfigurationsinformationen angegeben ist.

2. Verfahren nach Anspruch 1, wobei in einem Fall, in dem die PSFCH-Ressourcen durch Bits der PSFCH-Ressourcenkonfigurationsinformationen konfiguriert werden, eine erste Entsprechung zwischen den Bits der PSFCH-Ressourcenkonfigurationsinformationen und den Frequenzbereichsressourcen in einer Zielressource besteht, und die Zielressource eine der folgenden ist: ein Träger, ein BWP oder ein Ressourcenpool.

3. Verfahren nach Anspruch 2, wobei die PSFCH-Ressourcenkonfigurationsinformationen L Bits umfassen, und L eine der folgenden Bedingungen erfüllt:
ein Wert von L ist gleich einer ersten Zahl, wobei die erste Zahl die Anzahl der tatsächlichen Frequenzbereichsressourcen in der Zielressource oder die maximal mögliche Anzahl von Frequenzbereichsressourcen in der Zielressource ist; oder
L eine positive ganze Zahl ist; und/oder
wobei die Zielressource mindestens eine der folgenden Bedingungen erfüllt:
in einem Fall, in dem das Zielobjekt ein Ressourcenpool ist, ist die Zielressource eine der folgenden:
ein Träger, in dem sich das Zielobjekt befindet, ein BWP, in dem sich das Zielobjekt befindet, und ein Ressourcenpool;
in einem Fall, in dem das Zielobjekt ein BWP ist, ist die Zielressource ein BWP oder ein Träger, in dem sich das Zielobjekt befindet; und
für den Fall, dass das Zielobjekt ein Träger ist, die Zielressource ein Träger ist.

4. Verfahren nach Anspruch 2, wobei die erste Entsprechung eine der folgenden Bedingungen erfüllt:
das (p+a)-te Bit der Bits der PSFCH-Ressourcenkonfigurationsinformationen, die in aufsteigender Reihenfolge der Zahlen angeordnet sind, entspricht der p-ten Frequenzbereichsressource der Frequenzbereichsressourcen in der Zielressource, die in aufsteigender Reihenfolge der Zahlen angeordnet sind;
das (p+a)-te Bit der Bits der PSFCH-Ressourcenkonfigurationsinformationen, die in absteigender Reihenfolge der Zahlen angeordnet sind, entspricht der p-ten Frequenzbereichsressource der Frequenzbereichsressourcen in der Zielressource, die in absteigender Reihenfolge der Zahlen angeordnet sind;
das (p+a)-te Bit der Bits der PSFCH-Ressourcenkonfigurationsinformationen, die in absteigender Reihenfolge der Zahlen angeordnet sind, entspricht der p-ten Frequenzbereichsressource der Frequenzbereichsressourcen in der Zielressource, die in aufsteigender Reihenfolge der Zahlen angeordnet sind;
das (p+a)-te Bit der Bits der PSFCH-Ressourcenkonfigurationsinformationen, die in aufsteigender Reihenfolge der Zahlen angeordnet sind, entspricht der p-ten Frequenzbereichsressource der Frequenzbereichsressourcen in der Zielressource, die in absteigender Reihenfolge der Zahlen angeordnet sind;
das (p+a)-te Bit der Bits der PSFCH-Ressourcenkonfigurationsinformationen, die in aufsteigender Reihenfolge der Zahlen angeordnet sind, einer ersten Frequenzbereichsressource in der Zielressource entspricht, und Bits, die der Zielressource entsprechen, zusammenhängend sind; oder
das (p+a)-te Bit der Bits der PSFCH-Ressourcenkonfigurationsinformationen, die in absteigender Reihenfolge der Zahlen angeordnet sind, einer ersten Frequenzbereichsressource in der Zielressource entspricht und Bits, die der Zielressource entsprechen, zusammenhängend sind;
wobei p eine ganze Zahl im Bereich von 1 bis K ist, und K die Anzahl der tatsächlichen Frequenzdomänenressourcen in der Zielressource ist; und p+a eine ganze Zahl im Bereich von 1 bis L ist, L die Anzahl der Bits ist, die in den PSFCH-Ressourcenkonfigurationsinformationen enthalten sind, und a eine natürliche Zahl ist,
wobei die erste Frequenzbereichsressource mindestens eine der folgenden Bedingungen erfüllt:
in einem Fall, in dem die Zielressource ein Träger oder ein BWP ist, ist die erste Frequenzbereichsressource: eine Referenzressource der Zielressource oder ein spezifizierter Frequenzbereichsort in mindestens einem Frequenzbereichsort der Zielressource für Synchronisationssignalblock, SSB, Übertragung; und
die erste Frequenzbereichsressource eine zentrale Frequenzbereichsressource in der Zielressource ist.

5. Verfahren nach einem der Ansprüche 2 bis 4, wobei das Bestimmen von PSFCH-Ressourcen in einem Zielobjekt auf der Grundlage von erhaltenen PSFCH-Ressourcenkonfigurationsinformationen umfasst:
Bestimmen von Bits der PSFCH-Ressourcenkonfigurationsinformationen, die Frequenzbereichsressourcen in dem Zielobjekt entsprechen, als erste Zielbits; und
Bestimmen von PSFCH-Ressourcen in dem Zielobjekt auf der Grundlage jedes Wertes der ersten Zielbits;
wobei in einem Fall, dass ein erstes Bit in dem ersten Zielbit einen ersten Wert annimmt, Bestimmen, dass eine zweite Frequenzbereichsressource, die dem ersten Bit in dem Zielobjekt entspricht, eine PSFCH-Ressource ist;
und in einem Fall, dass das erste Bit einen zweiten Wert annimmt, Bestimmen, dass die zweite Frequenzbereichsressource keine PSFCH-Ressource ist,
wobei in einem Fall, in dem die PSFCH-Ressourcenkonfigurationsinformationen ferner zweite Zielbits umfassen, die sich von den ersten Zielbits unterscheiden, das Verfahren ferner umfasst:
Ignorieren der zweiten Zielbits, oder
wobei in einem Fall, in dem das Zielobjekt ferner eine dritte Frequenzbereichsressource umfasst und die dritte Frequenzbereichsressource keinem der Bits der PSFCH-Ressourcenkonfigurationsinformationen entspricht, das Verfahren ferner Folgendes umfasst:
Feststellen, dass die dritte Frequenzbereichsressource eine PSFCH-Ressource ist; oder
Feststellen, dass es sich bei der dritten Frequenzbereichsressource nicht um eine PSFCH-Ressource handelt.

6. Verfahren nach Anspruch 3, wobei in einem Fall, in dem ein Wert von L gleich einer ersten Zahl ist und die erste Zahl die Anzahl der tatsächlichen Frequenzbereichsressourcen in der Zielressource ist, das Verfahren vor dem Bestimmen von PSFCH-Ressourcen in einem Zielobjekt auf der Grundlage von erhaltenen PSFCH-Ressourcenkonfigurationsinformationen ferner umfasst:
Empfangen einer ersten Information, wobei die erste Information verwendet wird, um die Anzahl der tatsächlichen Frequenzbereichsressourcen in der Zielressource anzuzeigen; oder die erste Information wird verwendet, um einen ersten Parameter anzuzeigen, der zum Berechnen der Anzahl der tatsächlichen Frequenzbereichsressourcen in der Zielressource verwendet wird; und
das Bestimmen von PSFCH-Ressourcen in einem Zielobjekt auf der Grundlage von erhaltenen PSFCH-Ressourcen-Konfigurationsinformationen umfasst:
Bestimmen der PSFCH-Ressourcen in dem Zielobjekt auf der Grundlage der erhaltenen PSFCH-Ressourcenkonfigurationsinformationen und der ersten Informationen, oder
wobei in einem Fall, in dem ein Wert von L gleich einer ersten Zahl ist und die erste Zahl die Anzahl der tatsächlichen Frequenzbereichsressourcen in der Zielressource ist, die PSFCH-Ressourcenkonfigurationsinformationen eines der folgenden Elemente umfassen:
eine erste Bitmap oder eine erste Bitfolge mit L Bits; oder
N1 zweite Bitmaps oder zweite Bitstrings, wobei jedes der zweiten Bitmaps oder jeder der zweiten Bitstrings N2 Bits umfasst, und L=N1 xN2,
wobei die Zielressource N1 erste Ressourcen umfasst, und die Anzahl der tatsächlichen Frequenzbereichsressourcen in jeder der ersten Ressourcen gleich N2 ist.

7. Verfahren nach Anspruch 1, wobei die PSFCH-Ressourcenkonfigurationsinformationen verwendet werden, um mindestens eines der folgenden Elemente anzuzeigen:
eine Startressource von PSFCH-Ressourcen in dem Zielobjekt;
eine Referenzressource von PSFCH-Ressourcen in dem Zielobjekt;
das Zielobjekt;
einen Start-Unterkanal von PSFCH-Ressourcen im Zielobjekt; und
die Anzahl der Unterkanäle, die in PSFCH-Ressourcen im Zielobjekt enthalten sind.

8. Verfahren nach Anspruch 1, wobei die PSFCH-Ressourcenkonfigurationsinformationen eine Feldbeschreibung umfassen, wobei die Feldbeschreibung einen der folgenden Punkte angibt:
die Menge der PRBs, die tatsächlich für PSFCH-Sendung und -Empfang verwendet werden, wobei sich die erste PRB auf den niedrigsten RB-Index des Unterkanals mit dem niedrigsten Index im Ressourcenpool bezieht;
die Menge der PRBs, die tatsächlich für PSFCH-Sendung und -Empfang verwendet werden, das erste Bit bezieht sich auf den RB mit dem niedrigsten Index im Ressourcenpool.

9. Verfahren zum Konfigurieren von PSFCH-Ressourcen (physical sidelink feedback channel), das von einer zweiten Kommunikationsvorrichtung durchgeführt wird, umfassend
Übertragen (301) von PSFCH-Ressourcenkonfigurationsinformationen an eine erste Kommunikationsvorrichtung, wobei die PSFCH-Ressourcenkonfigurationsinformationen zum Bestimmen und Konfigurieren von PSFCH-Ressourcen in einem Zielobjekt verwendet werden; wobei das Zielobjekt mindestens eines der folgenden umfasst: einen Träger, einen Bandbreitenteil, BWP, und einen Ressourcenpool; und die PSFCH-Ressourcen PSFCH-Senderessourcen oder PSFCH-Empfängerressourcen oder sowohl PSFCH-Senderessourcen als auch PSFCH-Empfängerressourcen umfassen;
**dadurch gekennzeichnet, dass**:
die PSFCH-Ressourcenkonfigurationsinformationen verwendet werden, um zumindest eine Ressourcenzahl K von PSFCH-Ressourcen in dem Zielobjekt anzugeben;
K zusammenhängende Frequenzbereichsressourcen, beginnend mit einer fünften Frequenzbereichsressource der Frequenzbereichsressourcen in dem Zielobjekt, als PSFCH-Ressourcen konfiguriert sind,
wobei die fünfte Frequenzdomänen-Ressource eine der folgenden ist: die 1. Frequenzdomänen-Ressource oder die letzte Frequenzdomänen-Ressource der Frequenzdomänen-Ressourcen im Zielobjekt, die in absteigender Reihenfolge der Nummern angeordnet sind; eine Referenz-Ressource, die in den PSFCH-Ressourcen-Konfigurationsinformationen angegeben ist; oder eine Start-Ressource, die in den PSFCH-Ressourcen-Konfigurationsinformationen angegeben ist.

10. Verfahren nach Anspruch 9, wobei in einem Fall, in dem die PSFCH-Ressourcen durch Bits der PSFCH-Ressourcenkonfigurationsinformationen konfiguriert werden, eine erste Entsprechung zwischen den Bits der PSFCH-Ressourcenkonfigurationsinformationen und den Frequenzbereichsressourcen in einer Zielressource besteht, und die Zielressource eine der folgenden ist: ein Träger, ein BWP oder ein Ressourcenpool.

11. Verfahren nach Anspruch 10, wobei die PSFCH-Ressourcenkonfigurationsinformationen L Bits umfassen, und L eine der folgenden Bedingungen erfüllt:
ein Wert von L ist gleich einer ersten Zahl, wobei die erste Zahl die Anzahl der tatsächlichen Frequenzbereichsressourcen in der Zielressource oder die maximal mögliche Anzahl von Frequenzbereichsressourcen in der Zielressource ist; oder
L ist eine positive ganze Zahl.

12. Verfahren nach Anspruch 10, wobei die erste Entsprechung eine der folgenden Bedingungen erfüllt:
das (p+a)-te Bit der Bits der PSFCH-Ressourcenkonfigurationsinformationen, die in aufsteigender Reihenfolge der Zahlen angeordnet sind, entspricht der p-ten Frequenzbereichsressource der Frequenzbereichsressourcen in der Zielressource, die in aufsteigender Reihenfolge der Zahlen angeordnet sind;
das (p+a)-te Bit der Bits der PSFCH-Ressourcenkonfigurationsinformationen, die in absteigender Reihenfolge der Zahlen angeordnet sind, entspricht der p-ten Frequenzbereichsressource der Frequenzbereichsressourcen in der Zielressource, die in absteigender Reihenfolge der Zahlen angeordnet sind;
das (p+a)-te Bit der Bits der PSFCH-Ressourcenkonfigurationsinformationen, die in absteigender Reihenfolge der Zahlen angeordnet sind, entspricht der p-ten Frequenzbereichsressource der Frequenzbereichsressourcen in der Zielressource, die in aufsteigender Reihenfolge der Zahlen angeordnet sind;
das (p+a)-te Bit der Bits der PSFCH-Ressourcenkonfigurationsinformationen, die in aufsteigender Reihenfolge der Zahlen angeordnet sind, der p-ten Frequenzbereichsressource der Frequenzbereichsressourcen in der Zielressource entspricht, die in absteigender Reihenfolge der Zahlen angeordnet sind; oder
das (p+a)-te Bit der Bits der PSFCH-Ressourcenkonfigurationsinformationen, die in aufsteigender Reihenfolge der Zahlen angeordnet sind, entspricht einer ersten Frequenzdomänenressource in der Zielressource, und die der Zielressource entsprechenden Bits sind zusammenhängend;
wobei p eine ganze Zahl im Bereich von 1 bis K ist, und K die Anzahl der tatsächlichen Frequenzdomänenressourcen in der Zielressource ist; und p+a eine ganze Zahl im Bereich von 1 bis L ist, L die Anzahl der in den PSFCH-Ressourcenkonfigurationsinformationen enthaltenen Bits ist, und a eine natürliche Zahl ist,
wobei die erste Frequenzbereichsressource mindestens eine der folgenden Bedingungen erfüllt:
in einem Fall, in dem die Zielressource ein Träger oder ein BWP ist, ist die erste Frequenzbereichsressource: eine Referenzressource der Zielressource oder eine spezifizierte Frequenzbereichsstelle in mindestens einer Frequenzbereichsstelle der Zielressource für Synchronisationssignalblock-SSB-Übertragung; und
die erste Frequenzbereichsressource ist eine zentrale Frequenzbereichsressource in der Zielressource.

13. Verfahren nach Anspruch 11, wobei in einem Fall, in dem ein Wert von L gleich einer ersten Zahl ist und die erste Zahl die Anzahl der tatsächlichen Frequenzdomänenressourcen in der Zielressource ist, das Verfahren ferner umfasst:
Übertragen einer ersten Information an die erste Kommunikationsvorrichtung, wobei die erste Information verwendet wird, um die Anzahl der tatsächlichen Frequenzbereichsressourcen in der Zielressource anzuzeigen; oder die erste Information verwendet wird, um einen ersten Parameter anzuzeigen, der zum Berechnen der Anzahl der tatsächlichen Frequenzbereichsressourcen in der Zielressource verwendet wird, oder
wobei in einem Fall, in dem ein Wert von L gleich einer ersten Zahl ist und die erste Zahl die Anzahl der tatsächlichen Frequenzbereichsressourcen in der Zielressource ist, die PSFCH-Ressourcenkonfigurationsinformationen eines der folgenden Elemente umfassen:
eine erste Bitmap oder eine erste Bitfolge mit L Bits; oder
N1 zweite Bitmaps oder zweite Bitstrings, wobei jedes der zweiten Bitmaps oder jeder der zweiten Bitstrings N2 Bits umfasst, und L=N1 xN2,
wobei die Zielressource N1 erste Ressourcen umfasst und die Anzahl der tatsächlichen Frequenzbereichsressourcen in jeder der ersten Ressourcen gleich N2 ist.

14. Verfahren nach Anspruch 10, wobei die Zielressource mindestens eine der folgenden Bedingungen erfüllt:
in dem Fall, dass das Zielobjekt ein Ressourcenpool ist, ist die Zielressource eine der folgenden:
ein Träger, in dem sich das Zielobjekt befindet, ein BWP, in dem sich das Zielobjekt befindet, und ein Ressourcenpool;
in einem Fall, in dem das Zielobjekt ein BWP ist, ist die Zielressource ein BWP oder ein Träger, in dem sich das Zielobjekt befindet; und
für den Fall, dass das Zielobjekt ein Träger ist, die Zielressource ein Träger ist.

15. Verfahren nach Anspruch 9, wobei die PSFCH-Ressourcenkonfigurationsinformationen verwendet werden, um mindestens eines der folgenden Elemente anzuzeigen:
eine Startressource von PSFCH-Ressourcen in dem Zielobjekt;
eine Referenzressource von PSFCH-Ressourcen in dem Zielobjekt;
das Zielobjekt;
einen Start-Unterkanal von PSFCH-Ressourcen im Zielobjekt; und
die Anzahl von Unterkanälen, die in PSFCH-Ressourcen im Zielobjekt enthalten sind.

## Revendications

1. Procédé pour déterminer des ressources d'un canal de rétroaction de liaison latérale physique, PSFCH, effectué par un premier dispositif de communication, comprenant :
recevoir des informations sur la configuration des ressources PSFCH d'un deuxième dispositif de communication ;
déterminer (201) des ressources PSFCH dans un objet cible selon les informations acquises sur la configuration des ressources PSFCH, dans lequel l'objet cible comprend au moins l'un des suivants : une porteuse, une partie de bande passante BWP et un groupe de ressources, et les ressources PSFCH comprennent une transmission des ressources PSFCH, ou une réception des ressources PSFCH, ou à la fois une transmission des ressources PSFCH et une réception des ressources PSFCH ; et
effectuer (202) une opération cible sur les informations de rétroaction sur les ressources PSFCH, dans lequel l'opération cible comprend au moins une opération de réception et une opération de transmission ;
**caractérisé en ce que** :
les informations sur la configuration des ressources PSFCH sont utilisées pour au moins indiquer un nombre de ressources K de ressources PSFCH dans l'objet cible ;
la détermination de ressources PSFCH dans un objet cible selon les informations acquises sur la configuration des ressources PSFCH comprend :
déterminer des ressources K de domaine de fréquences contigus à partir d'une cinquième ressource de domaine de fréquences dans l'objet cible en tant que ressources PSFCH, dans lequel
la cinquième ressource de domaine de fréquences est l'une quelconque des suivantes : la première ressource de domaine de fréquences ou la dernière ressource de domaine de fréquences parmi les ressources de domaine de fréquences dans l'objet cible qui sont classées par ordre décroissant de nombres ; une ressource de référence indiquée dans les informations sur la configuration des ressources PSFCH ; ou une ressource de départ indiquée dans les informations sur la configuration des ressources PSFCH.

2. Procédé selon la revendication 1, dans lequel, dans un cas où les ressources PSFCH sont configurées par l'intermédiaire de bits des informations sur la configuration des ressources PSFCH, il existe une première correspondance entre les bits des informations sur la configuration des ressources PSFCH et des ressources de domaine de fréquences dans une ressource cible, et la ressource cible est l'un quelconque des suivants : une porteuse, une BWP ou un groupe de ressources.

3. Procédé selon la revendication 2, dans lequel les informations sur la configuration des ressources PSFCH comprennent L bits, et L satisfait l'un quelconque des suivants :
une valeur de L est égale à un premier nombre, où le premier nombre est le nombre de ressources de domaine de fréquences réelles dans la ressource cible ou le nombre maximum possible des ressources de domaine de fréquences dans la ressource cible ; ou
L est un nombre entier positif ; et/ou
dans lequel la ressource cible satisfait au moins l'une des suivantes :
dans un cas où l'objet cible est un groupe de ressources, la ressource cible est l'un des suivants : une porteuse dans laquelle l'objet cible est situé, une BWP dans laquelle l'objet cible est situé et un groupe de ressources ;
dans un cas où l'objet cible est une BWP, la ressource cible est une BWP ou une porteuse dans laquelle l'objet cible est situé ; et
dans un cas où l'objet cible est une porteuse, la ressource cible est une porteuse.

4. Procédé selon la revendication 2, dans lequel la première correspondance satisfait l'un quelconque des suivants :
le (p+a)-ième bit des bits d'informations sur la configuration des ressources PSFCH classés par ordre croissant de nombres correspond à la p-ième ressource de domaine de fréquences des ressources de domaine de fréquences dans la ressource cible classées par ordre croissant de nombres ;
le (p+a)-ième bit des bits d'informations sur la configuration des ressources PSFCH classés par ordre décroissant de nombres correspond à la p-ième ressource de domaine de fréquences des ressources de domaine de fréquences dans la ressource cible classées par ordre décroissant de nombres ;
le (p+a)-ième bit des bits d'informations sur la configuration des ressources PSFCH classés par ordre décroissant de nombres correspond à la p-ième ressource de domaine de fréquences des ressources de domaine de fréquences dans la ressource cible classées par ordre croissant de nombres ;
le (p+a)-ième bit des bits d'informations sur la configuration des ressources PSFCH classés par ordre croissant de nombres correspond à la p-ième ressource de domaine de fréquences des ressources de domaine de fréquences dans la ressource cible classées par ordre décroissant de nombres ;
le (p+a)-ième bit des bits d'informations sur la configuration des ressources PSFCH classés par ordre croissant de nombres correspond à une première ressource de domaine de fréquences dans la ressource cible, et les bits correspondant à la ressource cible sont contigus ; ou le (p+a)-ième bit des bits d'informations sur la configuration des ressources PSFCH disposés par ordre décroissant de nombres correspond à une première ressource de domaine de fréquences dans la ressource cible, et les bits correspondant à la ressource cible sont contigus ; dans lequel
p est un nombre entier compris entre 1 et K, et K est le nombre de ressources de domaine de fréquences réelles dans la ressource cible ; et p+a est un nombre entier compris entre 1 et L, L est le nombre de bits compris dans les informations sur la configuration des ressources PSFCH, et a est un nombre naturel,
dans lequel la première ressource de domaine de fréquences satisfait au moins l'un des suivants :
dans un cas où la ressource cible est une porteuse ou une BWP, la première ressource de domaine de fréquences est : une ressource de référence de la ressource cible, ou un emplacement de domaine de fréquences spécifié dans au moins un emplacement de domaine de fréquences de la ressource cible pour une transmission de bloc de signal de synchronisation, SSB ; et
la première ressource de domaine de fréquences est une ressource de domaine de fréquences centrale dans la ressource cible.

5. Procédé selon l'une quelconque des revendications 2 à 4, dans lequel la détermination des ressources PSFCH dans un objet cible selon des informations de configuration de ressources PSFCH obtenues comprend :
déterminer les bits d'informations sur la configuration des ressources PSFCH correspondant aux ressources du domaine de fréquences dans l'objet cible comme des premiers bits cibles ; et
déterminer les ressources PSFCH dans l'objet cible selon chaque valeur des premiers bits cibles ; dans lequel
dans un cas où un premier bit dans le premier bit cible prend une première valeur, déterminer qu'une seconde ressource de domaine de fréquences correspondant au premier bit dans l'objet cible est une ressource PSFCH ; et dans un cas où le premier bit prend une seconde valeur, déterminer que la seconde ressource de domaine de fréquences n'est pas une ressource PSFCH,
dans lequel, dans un cas où les informations sur la configuration des ressources PSFCH comprennent en outre des seconds bits cibles autres que les premiers bits cibles, le procédé comprend en outre :
ignorer les seconds bits cibles, ou
dans lequel, dans un cas où l'objet cible comprend en outre une troisième ressource de domaine de fréquences et la troisième ressource de domaine de fréquences ne correspond à aucun des bits d'informations sur la configuration des ressources PSFCH, le procédé comprend en outre l'un quelconque des suivants :
déterminer que la troisième ressource du domaine de fréquences est une ressource PSFCH ; ou
déterminer que la troisième ressource du domaine de fréquences n'est pas une ressource PSFCH.

6. Procédé selon la revendication 3, dans lequel, dans un cas où une valeur de L est égale à un premier nombre et le premier nombre est le nombre de ressources de domaine de fréquences réelles dans la ressource cible, avant la détermination des ressources PSFCH dans un objet cible selon les informations sur la configuration des ressources PSFCH obtenues, le procédé comprend en outre :
recevoir une première information, où la première information étant utilisée pour indiquer le nombre de ressources de domaine de fréquences réelles dans la ressource cible ; ou la première information étant utilisée pour indiquer un premier paramètre utilisé pour calculer le nombre de ressources de domaine de fréquences réelles dans la ressource cible ; et
la détermination des ressources PSFCH dans un objet cible selon les informations sur la configuration des ressources PSFCH obtenues comprend :
déterminer les ressources PSFCH dans l'objet cible selon les informations sur la configuration des ressources PSFCH obtenues et la première information, ou
dans lequel, dans un cas où une valeur de L est égale à un premier nombre et le premier nombre est le nombre de ressources de domaine de fréquences réelles dans la ressource cible, les informations sur la configuration des ressources PSFCH comprennent l'un quelconque des suivants :
un premier bitmap ou une première chaîne de bits avec L bits ; ou
des seconds bitmaps N1 ou des secondes chaînes de bits, où chacun des seconds bitmaps ou chacune des secondes chaînes de bits comprend des bits N2, et L=N1×N2,
dans lequel la ressource cible comprend des premières ressources N1, et le nombre de ressources de domaine de fréquences réelles dans chacune des premières ressources est égal à N2.

7. Procédé selon la revendication 1, dans lequel les informations sur la configuration des ressources PSFCH sont utilisées pour indiquer au moins l'un des suivants :
une ressource de démarrage des ressources PSFCH dans l'objet cible ;
une ressource de référence des ressources PSFCH dans l'objet cible ;
l'objet cible;
un sous-canal de démarrage des ressources PSFCH dans l'objet cible ; et
le nombre de sous-canaux compris dans les ressources PSFCH dans l'objet cible.

8. Procédé selon la revendication 1, dans lequel les informations sur la configuration des ressources PSFCH comprennent un champ de description, où le champ de description indique l'un quelconque des suivants :
l'ensemble de PRB qui sont effectivement utilisés pour des transmissions et réceptions de PSFCH, où le premier PRB se réfère à l'index RB le plus bas du sous-canal avec l'index le plus bas du groupe de ressources ;
l'ensemble de PRB qui sont effectivement utilisés pour des transmissions et réceptions de PSFCH, où le premier bit se réfère au RB avec l'index le plus bas du groupe de ressources.

9. Procédé pour configurer des ressources d'un canal de rétroaction de liaison latérale physique, PSFCH, effectué par un second dispositif de communication comprenant :
une transmission (301) des informations sur la configuration des ressources PSFCH à un premier dispositif de communication, dans lequel les informations sur la configuration des ressources PSFCH sont utilisées pour déterminer et configurer des ressources PSFCH dans un objet cible ; l'objet cible comprend au moins l'un des suivants : une transporteur, une partie de bande passante BWP et un groupe de ressources ; et les ressources PSFCH comprennent des ressources de transmission PSFCH, ou des ressources de réception PSFCH, ou à la fois des ressources de transmission PSFCH et des ressources de réception PSFCH.
**caractérisé en ce que** :
les informations sur la configuration des ressources PSFCH sont utilisées pour au moins indiquer un nombre de ressources K des ressources PSFCH dans l'objet cible ;
des ressources K de domaine de fréquences contigus à partir d'une cinquième ressource de domaine de fréquences parmi les ressources de domaine de fréquences dans l'objet cible sont configurées comme des ressources PSFCH, où
la cinquième ressource de domaine de fréquences est l'une quelconque des suivantes : la première ressource de domaine de fréquences ou la dernière ressource de domaine de fréquences parmi les ressources de domaine de fréquences dans l'objet cible classées par ordre décroissant de nombres ; une ressource de référence indiquée dans les informations sur la configuration des ressources PSFCH ; ou une ressource de départ indiquée dans les informations sur la configuration des ressources PSFCH.

10. Procédé selon la revendication 9, dans lequel, dans un cas où les ressources PSFCH sont configurées par des bits d'informations sur la configuration des ressources PSFCH, il existe une première correspondance entre les bits d'informations sur la configuration des ressources PSFCH et des ressources de domaine de fréquences dans une ressource cible, et la ressource cible est l'un quelconque des suivants : une porteuse, une BWP ou un groupe de ressources.

11. Procédé selon la revendication 10, dans lequel les informations sur la configuration des ressources PSFCH comprennent des bits L, et L satisfait l'un quelconque des suivants :
une valeur de L est égale à un premier nombre, où le premier nombre est le nombre de ressources de domaine de fréquences réelles dans la ressource cible ou le nombre maximum possible de ressources de domaine de fréquences dans la ressource cible ; ou
L est un nombre entier positif.

12. Procédé selon la revendication 10, dans lequel la première correspondance satisfait l'un quelconque des suivants :
le (p+a)-ième bit des bits d'informations sur la configuration des ressources PSFCH classés par ordre croissant de nombres correspond à la p-ième ressource de domaine de fréquences des ressources de domaine de fréquences dans la ressource cible classées par ordre croissant de nombres ;
le (p+a)-ième bit des bits d'informations sur la configuration des ressources PSFCH classés par ordre décroissant de nombres correspond à la p-ième ressource de domaine de fréquences des ressources de domaine de fréquences dans la ressource cible classées par ordre décroissant de nombres ;
le (p+a)-ième bit des bits d'informations sur la configuration des ressources PSFCH classés par ordre décroissant de nombres correspond à la p-ième ressource de domaine de fréquences des ressources de domaine de fréquences dans la ressource cible classées par ordre croissant de nombres ;
le (p+a)-ième bit des bits d'informations sur la configuration des ressources PSFCH classés par ordre croissant de nombres correspond à la p-ième ressource de domaine de fréquences des ressources de domaine de fréquences dans la ressource cible classées par ordre décroissant de nombres ; ou
le (p+a)-ième bit des bits d'informations sur la configuration des ressources PSFCH classés par ordre croissant de nombres correspond à une première ressource de domaine de fréquences dans la ressource cible, et les bits correspondant à la ressource cible sont contigus ; dans lequel
p est un nombre entier compris entre 1 et K, et K est le nombre de ressources de domaine de fréquences réelles dans la ressource cible ; et p+a est un nombre entier compris entre 1 et L, L est le nombre de bits compris dans les informations sur la configuration des ressources PSFCH, et a est un nombre naturel,
dans lequel la première ressource de domaine de fréquences satisfait au moins l'une des suivantes :
dans un cas où la ressource cible est une porteuse ou une BWP, la première ressource de domaine de fréquences est : une ressource de référence de la ressource cible, ou un emplacement de domaine de fréquences spécifié dans au moins un emplacement de domaine de fréquences de la ressource cible pour une transmission de bloc de signal de synchronisation SSB ; et
la première ressource de domaine de fréquences est une ressource de domaine de fréquences centrale dans la ressource cible.

13. Procédé selon la revendication 11, dans lequel, dans un cas où une valeur de L est égale à un premier nombre et le premier nombre est le nombre de ressources de domaine de fréquences réelles dans la ressource cible, le procédé comprend en outre :
une transmission des premières informations au premier dispositif de communication, où les premières informations sont utilisées pour indiquer le nombre de ressources de domaine de fréquences réelles dans la ressource cible ; ou les premières informations sont utilisées pour indiquer un premier paramètre utilisé pour calculer le nombre de ressources de domaine de fréquences réelles dans la ressource cible, ou
dans lequel, dans un cas où une valeur de L est égale à un premier nombre et le premier nombre est le nombre de ressources de domaine de fréquences réelles dans la ressource cible, les informations sur la configuration des ressources PSFCH comprennent l'un quelconque des suivants :
un premier bitmap ou une première chaîne de bits avec L bits ; ou
des seconds bitmaps N1 ou des secondes chaînes de bits, où chacun des seconds bitmaps ou chacune des secondes chaînes de bits comprend des bits N2, et L=N1×N2,
dans lequel la ressource cible comprend des premières ressources N1, et le nombre de ressources de domaine de fréquences réelles dans chacune des premières ressources est égal à N2.

14. Procédé selon la revendication 10, dans lequel la ressource cible satisfait au moins l'une des suivantes :
dans un cas où l'objet cible est un groupe de ressources, la ressource cible est l'un quelconque des suivants : une porteuse dans laquelle l'objet cible est situé, une BWP dans laquelle l'objet cible est situé et un groupe de ressources ;
dans un cas où l'objet cible est une BWP, la ressource cible est une BWP ou une porteuse dans laquelle l'objet cible est situé ; et
dans un cas où l'objet cible est une porteuse, la ressource cible est une porteuse.

15. Procédé selon la revendication 9, dans lequel les informations sur la configuration des ressources PSFCH sont utilisées pour indiquer au moins l'un des suivants :
une ressource de démarrage des ressources PSFCH dans l'objet cible ;
une ressource de référence des ressources PSFCH dans l'objet cible ;
l'objet cible;
un sous-canal de démarrage des ressources PSFCH dans l'objet cible ; et
le nombre de sous-canaux compris dans les ressources PSFCH dans l'objet cible.
